# EUROPÄISCHE PATENTSCHRIFT

(11) **EP 1 801 724 B1**
(45) Veröffentlichungstag und Bekanntmachung des Hinweises auf die Patenterteilung: **21.03.2012**
(21) Anmeldenummer: 06126878.5
(22) Anmeldetag: 21.12.2006
(51) Int. Cl.: G06F 21/00, G07B 17/04

(54) **Verfahren und Anordnung zum Bereitstellen sicherheitsrelevanter Dienste durch ein Sicherheitsmodul einer Frankiermaschine**
Method and apparatus providing security relevant services by a security module of a franking machine
Procédé et dispositif pour fournir des services liés à la sécurité par un module de sécurité d'une machine d'affranchissement

(30) Priorität: 21.12.2005 DE 102005061686
(43) Veröffentlichungstag der Anmeldung: 27.06.2007
(73) Patentinhaber: Francotyp-Postalia GmbH, 16547 Birkenwerder (DE)
(72) Erfinder: Bleumer, Gerrit, 16552, Schildow (DE); Heinrich, Clemens, 12191, Berlin (DE)
(74) Vertreter: Cohausz & Florack

(56) Entgegenhaltungen:
- EP-A- 1 486 855
- EP-A2- 1 202 223
- WO-A-00/77748
- CH-A5- 675 497
- DE-A1- 19 711 998
- US-A- 5 655 077
- US-A- 6 134 328
- US-A1- 2001 014 158
- US-B1- 6 785 811
- US-B1- 6 868 406

## Beschreibung

Die vorliegende Erfindung betrifft ein Verfahren zum Bereitstellen wenigstens eines sicherheitsrelevanten Dienstes durch ein Sicherheitsmodul einer Frankiermaschine für wenigstens eine erste Anwendung zur Datenverarbeitung, die auf einer mit der Frankiermaschine verbindbaren Datenverarbeitungseinrichtung ausgeführt wird, bei dem die erste Anwendung in einem Anforderungsschritt einen sicherheitsrelevanten ersten Dienst von dem Sicherheitsmodul anfordert und das Sicherheitsmodul in einem dem Anforderungsschritt nachfolgenden Bereitstellungsschritt den ersten Dienst bereit stellt. Sie betrifft weiterhin eine entsprechende Anordnung zum Bereitstellen sicherheitsrelevanter Dienste, eine entsprechende Frankiermaschine, eine entsprechende Datenverarbeitungseinrichtung sowie eine entsprechende Anwendung zur Datenverarbeitung.

Heutige Frankiermaschinen werden in der Regel mit einem Sicherheitsmodul ausgestattet, welches die postalischen Register enthält, mithin also die Abrechnung für die Frankierungen vornimmt bzw. dokumentiert, und einen Teil der mehr oder weniger komplexen Berechnungen zur Erstellung des jeweiligen Frankierabdrucks ausführt. Eine Reihe von Postbeförderern fordert die kryptographische Absicherung eines Teils der abgedruckten Daten, sodass das Sicherheitsmodul häufig als mehr oder weniger aufwändig gestaltetes und zertifiziertes Kryptographiemodul gestaltet ist.

Der Leistungsumfang der Frankiermaschine spiegelt sich - nicht zuletzt aus Gründen der Herstellungskosten - grundsätzlich im Leistungsumfang des Sicherheitsmoduls wider. So ist in der Regel in einer Frankiermaschine mit geringerem Leistungsumfang auch nur ein Sicherheitsmodul mit geringerem Leistungsumfang erforderlich, während in anspruchsvolleren Frankiermaschinen üblicherweise Sicherheitsmodule mit größerem Leistungsumfang (höhere Rechenleistung, höhere Speicherkapazität etc.) zum Einsatz kommen.

Im Hinblick auf die in der Regel erforderliche Zertifizierung der Sicherheitsmodule ist es demgegenüber wünschenswert, möglichst wenige unterschiedliche Sicherheitsmodule zu verwenden, um den Aufwand für die Zertifizierung möglichst gering zu halten.

Um den hinsichtlich der Herstellungskosten negativen Effekt der Ausstattung einer Frankiermaschine mit einem aufwändigen Sicherheitsmodul auszugleichen bzw. aufzufangen, wurde in der US 5,796,841 bzw. der US 6,134,328 (beide Cordery et al.) beispielsweise vorgeschlagen, das Sicherheitsmodul für weitere sicherheitsrelevante Dienste, wie beispielsweise das Management (Erstellung, Verifizierung, Widerruf etc.) von digitalen Zertifikaten zu nutzen. Dabei wird vorgeschlagen, das Sicherheitsmodul einer Frankiermaschine mit einem vorgegebenen PC zu verbinden, der dann die entsprechenden sicherheitsrelevante Dienste vom Sicherheitsmodul anfordert und diese auch erhält, sofern ausreichend Guthaben in den Registern des Sicherheitsmoduls vorhanden ist. Nachteilig hierbei ist, dass die Ausführung der sicherheitsrelevanten Dienste nur an den PC gebunden ist, sodass die Kapazitäten des Sicherheitsmoduls, insbesondere hinsichtlich möglicher zusätzlicher Sicherheitsaspekte, nicht ausgeschöpft werden.

Ein weiteres gattungsgemäßes Verfahren ist aus der US 6,868,406 (Ogg et al.) bekannt.

Der vorliegenden Erfindung liegt daher die Aufgabe zu Grunde, ein Verfahren bzw. Anordnung zum Bereitstellen sicherheitsrelevanter Dienste, eine Frankiermaschine, eine Datenverarbeitungseinrichtung sowie eine Anwendung zur Datenverarbeitung der eingangs genannten Art zur Verfügung zu stellen, welches bzw. welche die oben genannten Nachteile nicht oder zumindest in geringerem Maße aufweist und insbesondere eine bessere Ausnutzung der sicherheitstechnischen und damit wirtschaftlichen Möglichkeiten des postalischen Sicherheitsmoduls der Frankiermaschine ermöglicht.

Die vorliegende Erfindung löst diese Aufgabe mit einem Verfahren gemäß Anspruch 1. Sie löst diese Aufgabe weiterhin mit einer Anordnung gemäß Anspruch 20.

Der vorliegenden Erfindung liegt die technische Lehre zu Grunde, dass eine bessere Ausnutzung der sicherheitstechnischen und damit wirtschaftlichen Möglichkeiten des postalischen Sicherheitsmoduls der Frankiermaschine ermöglicht, wenn das Sicherheitsmodul vor der Bereitstellung eines sicherheitsrelevanten Dienstes eine Berechtigung der ersten Anwendung zur Anforderung des ersten Dienstes verifiziert. Hierdurch ist keine spezielle Bindung zwischen der Frankiermaschine und einer bestimmten Datenverarbeitungseinrichtung erforderlich, über welche der sicherheitsrelevante Dienst angefordert wird. Vielmehr können beliebige Berechtigungskriterien vorgegeben werden, die von dem Sicherheitsmodul abgefragt und hinsichtlich ihrer Erfüllung überprüft werden können, womit wiederum die Berechtigung verifiziert werden kann. Dies hat den Vorteil, dass neben einer Bindung der Berechtigung an die erste Anwendung auch eine Bindung der Berechtigung an die Verwendung einer oder mehrerer Datenverarbeitungseinrichtungen oder auch eine Bindung an Personen oder Personengruppen möglich ist. Insgesamt ist hiermit eine deutliche Ausweitung der Nutzung der sicherheitsrelevanten Dienste des Sicherheitsmoduls möglich.

Es sei an dieser Stelle angemerkt, dass unter dem Begriff sicherheitsrelevanter Dienst im Sinne der vorliegenden Erfindung jeglicher Dienst verstanden werden soll, mit dem entweder eine Generierung oder Ausgabe sicherheitsrelevanter Daten (z. B. Identitätskennungen, Passwörter, kryptographische Schlüssel, digitale Zertifikate etc.) erfolgt oder eine Absicherung beliebiger Daten gegen unbefugten Zugriff, unbefugte Einsicht oder unerkannte Manipulation erfolgt.

Das Sicherheitsmodul kann mehrere Identitäten und zugehörige Autorisierungsinformationen verwalten. Erfindungsgemäß ist vorgesehen, dass der erste Dienst die Ausgabe einer Autorisierungsnachricht umfasst, die eine in dem Sicherheitsmodul gespeicherte Identifikation und/oder eine in dem Sicherheitsmodul gespeicherte Autorisierungsinformation umfasst, wobei die Autorisierungsnachricht zur Eingabe als Zugangsdaten in und für die erste Anwendung und/oder eine zweite Anwendung zur Datenverarbeitung vorgesehen ist, und die Generierung der zweiten Autorisierungsnachricht in Abhängigkeit von der ersten Anwendung und/oder der Datenverarbeitungseinrichtung und/oder dem Nutzer der ersten Anwendung erfolgt.

Hiermit ist es beispielsweise möglich, für einen Benutzer mehrere Identitäten und zugehörige Passwörter oder dergleichen im Sicherheitsmodul zu verwalten, die der Nutzer dann über die Autorisierung gegenüber dem Sicherheitsmodul abrufen kann. So kann die zweite Anwendung beispielsweise ein Online-Banking-Programm sein, welches im Rahmen einer Login-Routine die erste Anwendung aufruft. Der erste Dienst kann dann die Ausgabe der das Login des Online-Banking-Programms erforderlichen Zugangsdaten sein, die im Sicherheitsmodul gesichert gespeichert sind. Auch hier kann wieder eine entsprechende kryptographisch abgesicherte Ausgabe der Zugangsdaten vorgesehen sein, um die Sicherheit zu erhöhen. Eine weitere zweite Anwendung kann wiederum in einer Login-Routine die erste Anwendung aufrufen, wobei der erste Dienst dann die Ausgabe der für das Login der weiteren zweite Anwendung erforderlichen Zugangsdaten ist, die ebenfalls im Sicherheitsmodul gesichert gespeichert sind und sich in der Regel von den Zugangsdaten des Online-Banking-Programms unterscheiden.

Bei der ersten Anwendung kann es sich um eine postalische Anwendung zur Datenverarbeitung, beispielsweise das Generieren Frankierungen am PC, handeln. Der erste Dienst kann dann beispielsweise ebenfalls ein postalischer Dienst sein, beispielsweise die kryptographische Absicherung von zu druckenden postalischen Daten. Ebenso kann der erste Dienst dann aber beispielsweise ein nicht-postalischer Dienst sein, beispielsweise die kryptographische Absicherung oder Protokollierung nicht-postalischer Daten. Bevorzugt ist die erste Anwendung aber eine nicht-postalische Anwendung zur Datenverarbeitung und der erste Dienst ein nicht-postalischer Dienst. Hierdurch ergibt sich eine erhebliche Erweiterung der Nutzung der sicherheitstechnischen Kapazitäten des Sicherheitsmoduls.

Wie bereits erwähnt, können beliebige Kriterien festgelegt werden, deren Erfüllung zur Verifizierung der Berechtigung zur Anforderung des ersten Dienstes überprüft wird. Bevorzugt verifiziert das Sicherheitsmodul in dem Verifikationsschritt eine zu übermittelnde Autorisierungsinformation der ersten Anwendung um die der Berechtigung zur Anforderung des ersten Dienstes zu verifizieren. Zusätzlich kann eine zu übermittelnde Autorisierungsinformation der Datenverarbeitungseinrichtung und/oder des Nutzers der ersten Anwendung verifiziert werden. Mit anderen Worten wird neben der Bindung der Berechtigung an die erste Anwendung bevorzugt die Berechtigung an die Datenverarbeitungseinrichtung, welche die erste Anwendung ausführt, und/oder den Nutzer der ersten Anwendung geknüpft.

Vorzugsweise fordert in einem dem Verfikationsschritt vorangehenden Autorisierungsschritt das Sicherheitsmodul die zu übermittelnde Autorisierungsinformation der ersten Anwendung und gegebenenfalls eine zusätzlich zu übermittelnde Autorisierungsinformation der Datenverarbeitungseinrichtung und/oder des Nutzers der ersten Anwendung von der ersten Anwendung an. Zusätzlich oder alternativ kann die erste Anwendung die zu übermittelnde Autorisierungsinformation der ersten Anwendung und die gegebenenfalls zusätzlich zu übermittelnde Autorisierungsinformation der Datenverarbeitungseinrichtung und/oder des Nutzers der ersten Anwendung automatisch an das Sicherheitsmodul übermitteln.

Bei bestimmten Varianten des erfindungsgemäßen Verfahrens fordert die erste Anwendung den Nutzer der ersten Anwendung in dem Autorisierungsschritt zur Eingabe einer zu übermittelnden Autorisierungsinformation auf, die dann von der ersten Anwendung unmittelbar an das Sicherheitsmodul weitergeleitet wird. Die erste Anwendung kann dann im Hinblick hierauf besonders einfach gestaltet sein. Zusätzlich oder alternativ kann die erste Anwendung unter Verwendung der zu übermittelnden Autorisierungsinformation eine weitere zu übermittelnde Autorisierungsinformation generieren und an das Sicherheitsmodul weiterleiten. Hiermit ist es beispielsweise möglich, dass schon in der ersten Anwendung eine vorgelagerte Berechtigungsüberprüfung implementiert ist, die bei erfolgreicher Verifikation in der Generierung der weiteren zu übermittelnden Autorisierungsinformation resultiert, anhand derer dann wiederum das Sicherheitsmodul die Berechtigungsüberprüfung vornimmt. Diese weitere zu übermittelnde Autorisierungsinformation kann hierbei wiederum an die erste Anwendung und/oder an die Datenverarbeitungseinrichtung gekoppelt sein, welche die erste Anwendung ausführt. So kann - sofern die erste Anwendung und/oder die Datenverarbeitungseinrichtung entsprechende Sicherheitskriterien erfüllt - gegebenenfalls die Anzahl der im Sicherheitsmodul für die Verifizierung vorzuhaltenden Datensätze reduziert bzw. gering gehalten werden, ohne gleichzeitig den Kreis der Anwender des ersten Dienstes des Sicherheitsmoduls einzuschränken.

Die Übermittlung der zu übermittelnden Autorisierungsinformation an das Sicherheitsmodul kann in beliebiger geeigneter Weise erfolgen. Der Sicherheitslevel der Übermittlung richtet sich dabei bevorzugt nach dem Sicherheitslevel des ersten Dienstes. Bevorzugt wird die zu übermittelnde Autorisierungsinformation durch kryptographische Mittel abgesichert an das Sicherheitsmodul übermittelt, um unerkannte Manipulationen oder betrügerische Nutzung des ersten Dienstes wirksam zu verhindern.

Die zu übermittelnde Autorisierungsinformation selbst kann schon in entsprechender Weise gesichert sein. Bei besonders einfach zu handhabenden Varianten der Erfindung sichert jedoch die erste Anwendung die zu übermittelnde Autorisierungsinformation vor der Übermittlung an das Sicherheitsmodul durch kryptographische Mittel ab.

Für die kryptographische Absicherung können grundsätzlich beliebige geeignete Mittel und Verfahren eingesetzt werden. Bevorzugt wird zur kryptographischen Absicherung der zu übermittelnden Autorisierungsinformation wenigstens ein durch eine Hash-Funktion generierter Hashwert der zu übermittelnden Autorisierungsinformation verwendet. So kann beispielsweise ein so genannter Message Authentication Code (MAC) verwendet werden, bei dem in hinlänglich bekannter Weise aus der zu übermittelnden Autorisierungsinformation und einem Geheimnis (beispielsweise einem geheimen Schlüssel) ein Hashwert generiert wird. Zusätzlich oder alternativ kann zur kryptographischen Absicherung der zu übermittelnden Autorisierungsinformation eine Verschlüsselung der zu übermittelnden Autorisierungsinformation und/oder eine digitale Signatur über der zu übermittelnden Autorisierungsinformation verwendet werden.

Bei der zu übermittelnden Autorisierungsinformation kann es sich um eine isolierte Information handeln, beispielsweise eine Zufallszahl oder eine beliebige verschlüsselte Information, die von dem Sicherheitsmodul zur Verifizierung der Berechtigung nach einem vorgegebenen Algorithmus isoliert überprüft wird, beispielsweise mit einem entsprechenden gespeicherten Pendant verglichen wird, und bei erfolgreicher Überprüfung die Bereitstellung des ersten Dienstes auslöst. Dabei kann die jeweilige zu übermittelnde Autorisierungsinformation nur einmalig verwendbar sein, es kann sich somit um einen einmaligen so genannten digitalen Token handeln.

Bevorzugt erfolgt wie erwähnt eine Bindung an die erste Anwendung und gegebenenfalls zusätzlich an die Datenverarbeitungseinrichtung und/oder den Nutzer der ersten Anwendung, um die Menge der zur Verifizierung im Sicherheitsmodul vorzuhaltenden Daten zu reduzieren. Vorzugsweise ist daher vorgesehen, dass in dem Autorisierungsschritt an das Sicherheitsmodul eine weitere Autorisierungsnachricht übermittelt wird, welche die zu übermittelnde Autorisierungsinformation und eine Identifikation der ersten Anwendung und gegebenenfalls zusätzlich eine Identifikation der Datenverarbeitungseinrichtung und/oder des Nutzers der ersten Anwendung umfasst. Anhand der Identifikation können dann im Sicherheitsmodul auf einfache Weise die zur Verifizierung im vorgehaltenen Daten identifiziert werden.

So kann beispielsweise vorgesehen sein, dass im Sicherheitsmodul für jede autorisierte erste Anwendung und gegebenenfalls zusätzlich für jede autorisierte Datenverarbeitungseinrichtung und/oder jeden autorisierten Nutzer der ersten Anwendung ein Datensatz mit der Identifikation und einer zugeordneten Autorisierungsinformation gespeichert ist, die dann anhand der übermittelten Identifikation identifiziert und dann zur Verifizierung der Berechtigung mit der übermittelten Autorisierungsinformation verglichen wird.

Bevorzugt verschlüsselt die erste Anwendung in dem Autorisierungsschritt zumindest die zu übermittelnde Autorisierungsinformation der weiteren Autorisierungsnachricht. Das Sicherheitsmodul entschlüsselt in dem Verifikationsschritt dann zumindest die zu übermittelnde Autorisierungsinformation der weiteren Autorisierungsnachricht, ermittelt anhand der Identifikation aus der zu übermittelnden Autorisierungsnachricht eine im Sicherheitsmodul gespeicherte, der ersten Anwendung und/oder der Datenverarbeitungseinrichtung und/oder dem Nutzer der ersten Anwendung zugeordnete Vergleichs-Autorisierungsinformation und vergleicht zur Verifikation der Autorisierung die gespeicherte Vergleichs-Autorisierungsinformation mit der entschlüsselten zu übermittelnden Autorisierungsinformation. Bei Vorliegen einer vorgegebenen Beziehung zwischen der gespeicherten Vergleichs-Autorisierungsinformation und der entschlüsselten zu übermittelnden Autorisierungsinformation stellt das Sicherheitsmodul dann in dem Bereitstellungsschritt den ersten Dienst bereit.

Die zu übermittelnde Autorisierungsinformation kann beliebig gestaltet sein. Bevorzugt umfasst die zu übermittelnde Autorisierungsinformation ein Passwort und/oder ein biometrisch erfasstes Merkmal des Nutzers der ersten Anwendung. Im besonders einfach zu realisierenden Fall des Passworts wird das Passwort von dem Nutzer der ersten Anwendung durch manuelle Eingabe oder durch Auslesen einer Speichereinrichtung an die erste Anwendung übergeben wird. Das Auslesen der Speichereinrichtung kann einfach dadurch geschehen, dass der Speicher mit der die erste Anwendung ausführenden Datenverarbeitungseinrichtung verbunden wird, beispielsweise eine Chip-Karte oder dergleichen in einen Kartenleser der Datenverarbeitungseinrichtung eingeführt wird. Ebenso kann das Auslesen der Speichereinrichtung natürlich auch berührungslos erfolgen. Bei dem Passwort kann es sich im Übrigen um einen beliebigen Datenstring beliebigen Inhalts handeln.

Im besonders sicheren Fall des biometrischen Merkmals des Nutzers der ersten Anwendung wird das biometrische Merkmal der ersten Anwendung bevorzugt durch einen biometrischen Sensor übergeben, der das entsprechende biometrische Merkmal des Nutzers der ersten Anwendung erfasst hat. Vorzugsweise ist dieser biometrische Sensor direkt mit der die erste Anwendung ausführenden Datenverarbeitungseinrichtung verbunden.

Die zu übermittelnde Autorisierungsinformation kann sowohl einzelnen Nutzern der ersten Anwendung als auch einer Gruppe von Nutzern der ersten Anwendung sein, z.B. der Abteilung einer Firma, welche die Frankiermaschine nutzt, zugeordnet sein.

Bei bevorzugten Varianten des erfindungsgemäßen Verfahrens ist vorgesehen, dass das Sicherheitsmodul in einem während und/oder nach dem Bereitstellungsschritt erfolgenden Abrechnungsschritt eine Abrechnung für die Bereitstellung des ersten Dienstes vornimmt. Hierdurch kann in einfacher Weise ein Bezahlsystem für die Nutzung des ersten Dienstes implementiert werden. Vorzugsweise ist vorgesehen, dass in dem Abrechnungsschritt der Inhalt eines Abrechnungsspeichers des Sicherheitsmoduls modifiziert wird, wobei der Abrechnungsspeicher ein postalischer Abrechnungsspeicher des Sicherheitsmoduls ist. Es versteht sich jedoch, dass es sich bei dem Abrechnungsspeicher auch um einen zusätzlichen Speicher des Sicherheitsmoduls handeln kann.

Bei dem ersten Dienst kann es sich um einen beliebigen sicherheitsrelevanten Dienst handeln, bei dem sicherheitsrelevante Operationen ausgeführt werden. Bevorzugt umfasst der erste Dienst die Verschlüsselung und/oder die Entschlüsselung und/oder die digitale Signierung und/oder die digitale Zertifizierung und/oder die digitale Verifizierung von Daten, die hierzu von der ersten Anwendung an das Sicherheitsmodul übermittelt werden. Ebenso kann es sich um weitere Dienste im Zusammenhang mit dem Management digitaler Zertifikate handeln, beispielsweise den Widerruf digitaler Zertifikate etc.

So kann es sich bei der ersten Anwendung beispielsweise um ein e-mail-Programm handeln, welches auf der Datenverarbeitungseinrichtung ausgeführt wird, und bei dem ersten Dienst beispielsweise um die individuell abrufbare oder automatische Ver- und Entschlüsselung des e-mail-Verkehrs, der über dieses e-mail-Programm abgewickelt wird. Selbstverständlich kann es sich bei einem anderen ersten Dienst in diesem Zusammenhang auch um die digitale Signierung und Signaturverifizierung des e-mail-Verkehrs handeln, der über dieses e-mail-Programm abgewickelt wird. Ebenso kann es sich bei der ersten Anwendung beispielsweise um ein Datenverwaltungsprogramm handeln, welches auf der Datenverarbeitungseinrichtung ausgeführt wird, und bei dem ersten Dienst beispielsweise um die individuell abrufbare oder automatische Ver- und Entschlüsselung bzw. digitale Signierung und Signaturverifizierung der verwalteten Daten.

Weiterhin kann es sich bei der ersten Anwendung eine Anwendung handeln, mit der Managementfunktionen in einer kryptographischen Hierarchie, beispielsweise einer Zertifizierungsinstanz - so genannte Certificate Authority (CA) - in einer Public-Key-Infrastruktur, ausgeübt werden können. Der erste Dienst kann dann die Generierung und/oder Zertifizierung von kryptographischen Schlüsseln sein.

Ebenso kann die erste Anwendung eine Anwendung zur Abwicklung von Auktionen oder Bezahlvorgängen oder dergleichen sein und der erste Dienst dann die Generierung eines entsprechend kryptographisch abgesicherten (d.h. verschlüsselten und/oder signierten und/oder zertifizierten) digitalen Zahlungsmittels bzw. Zahlungsbelegs sein. Dabei können durch das Sicherheitsmodul sowohl Vorausbezahlungssysteme (so genannte Prepayment-Systeme) als auch Kreditsysteme (so genannte Postpayment-Systeme) realisiert werden. Zudem können die Zahlungen unter anderem über die erfindungsgemäße Verifizierung der Berechtigung sowohl einzelnen Personen als auch Personengruppen, beliebigen Organisationseinheiten oder juristischen Personen zugeordnet werden.

Bei weiteren Varianten der Erfindung umfasst der erste Dienst die Speicherung von Daten im Sicherheitsmodul, die hierzu von der ersten Anwendung an das Sicherheitsmodul übermittelt werden. Hierbei kann es sich unter anderem um die gegebenenfalls entsprechend kryptographisch abgesicherte Protokollierung und/oder Archivierung beliebiger Ereignisse handeln. Insbesondere kann die Protokollierung und/oder Archivierung abrechnungsrelevanter Ereignisse dann später dazu dienen bestimmte Abrechnungsvorgänge auszulösen und/oder dort als Beleg verwendet zu werden.

Bei Varianten, bei denen der erste Dienst die Verschlüsselung und/oder digitale Signierung und/oder digitale Zertifizierung von Daten umfasst, die hierzu von der ersten Anwendung an das Sicherheitsmodul übermittelt werden, kann vorgesehen sein, dass hierfür eine eigene kryptographische Hierarchie aufgebaut bzw. verwendet wird. Bevorzugt ist jedoch vorgesehe, dass dies unter Verwendung einer kryptographischen Bindung des Sicherheitsmoduls an eine postalische Public-Key-Infrastruktur erfolgt, sodass keine eigene kryptographische Hierarchie aufgebaut bzw. verwendet werden muss.

Vorzugsweise ist die Bereitstellung des ersten Dienstes für eine Mehrzahl erster Anwendungen vorgesehen. Das Sicherheitsmodul umfasst dann in einem Speicher für wenigstens eine Datenverarbeitungseinrichtung und/oder wenigstens einen Nutzer der Datenverarbeitungseinrichtung eine Mehrzahl von Speichereinträgen, die jeweils einer ersten Anwendung zugeordnet sind. Jeder der Speichereinträge umfasst wenigstens eine Identifikation und/oder eine Autorisierungsinformation. Zur Generierung der Autorisierungsnachricht wird derjenige Speichereintrag verwendet, welcher der aktuell anfordernden ersten Anwendung zugeordnet ist.

Die vorliegende Erfindung betrifft weiterhin eine Anordnung zur Datenverarbeitung mit einer Frankiermaschine, die ein postalisches Sicherheitsmodul umfasst, und wenigstens einer Datenverarbeitungseinrichtung, die mit der Frankiermaschine verbindbar ist und zum Ausführen wenigstens einer ersten Anwendung zur Datenverarbeitung ausgebildet ist, wobei die erste Anwendung zur Anforderung eines sicherheitsrelevanten ersten Dienstes von dem Sicherheitsmodul ausgebildet ist und das Sicherheitsmodul zur der Anforderung nachfolgenden Bereitstellung des ersten Dienstes ausgebildet ist. Erfindungsgemäß ist das Sicherheitsmodul zur der Bereitstellung vorangehenden Verifikation einer Berechtigung der ersten Anwendung zur Anforderung des ersten Dienstes ausgebildet. Der erste Dienst umfasst die Ausgabe einer Autorisierungsnachricht, die eine in dem Sicherheitsmodul gespeicherte Identifikation und/oder eine in dem Sicherheitsmodul gespeicherte Autorisierungsinformation umfasst, wobei die Autorisierungsnachricht zur Eingabe als Zugangsdaten in und für die erste Anwendung und/oder eine zweite Anwendung zur Datenverarbeitung vorgesehen ist, und das Sicherheitsmodul zur Generierung der Autorisierungsnachricht in Abhängigkeit von der ersten Anwendung und/oder der Datenverarbeitungseinrichtung und/oder dem Nutzer der ersten Anwendung ausgebildet ist.

Mit dieser Anordnung lassen sich die oben beschriebenen Varianten und Vorteile des erfindungsgemäßen Verfahrens in gleichem Maße realisieren, sodass hier lediglich auf die obigen Ausführungen Bezug genommen wird.

Die vorliegende Erfindung betrifft weiterhin eine Frankiermaschine, welche die oben beschriebenen Merkmale aufweist, eine Datenverarbeitungseinrichtung, welche die oben beschriebenen Merkmale aufweist, sowie eine Anwendung zur Datenverarbeitung, die als erste Anwendung für eine erfindungsgemäße Anordnung ausgebildet ist und die oben beschriebenen Merkmale aufweist. Hiermit lassen sich die oben beschriebenen Varianten und Vorteile des erfindungsgemäßen Verfahrens in gleichem Maße realisieren, sodass hier lediglich auf die obigen Ausführungen Bezug genommen wird.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen
- Figur 1: eine schematische Darstellung einer bevorzugten Ausführungsform der erfindungsgemäßen Anordnung zur Bereitstellung von sicherheitsrelevanten Diensten, mit welcher eine bevorzugte Variante des erfindungsgemäßen Verfahrens zur Bereitstellung von sicherheitsrelevanten Diensten durchgeführt werden kann;
- Figur 2: ein Ablaufdiagramm einer bevorzugten Variante des erfindungsgemäßen Verfahrens zur Bereitstellung von sicherheitsrelevanten Diensten, welches mit der Anordnung aus Figur 1 durchgeführt werden kann
- Figur 3: eine schematische Darstellung einer Autorisierungsnachricht, die bei der Durchführung des Verfahrens aus Figur 2 verwendet wird;

- Figur 4: eine schematische Darstellung einer Anforderungsnachricht, die bei der Durchführung des Verfahrens aus Figur 2 verwendet wird;
- Figur 5: eine schematische Darstellung einer Antwortnachricht, die bei der Durchführung des Verfahrens aus Figur 2 verwendet wird.

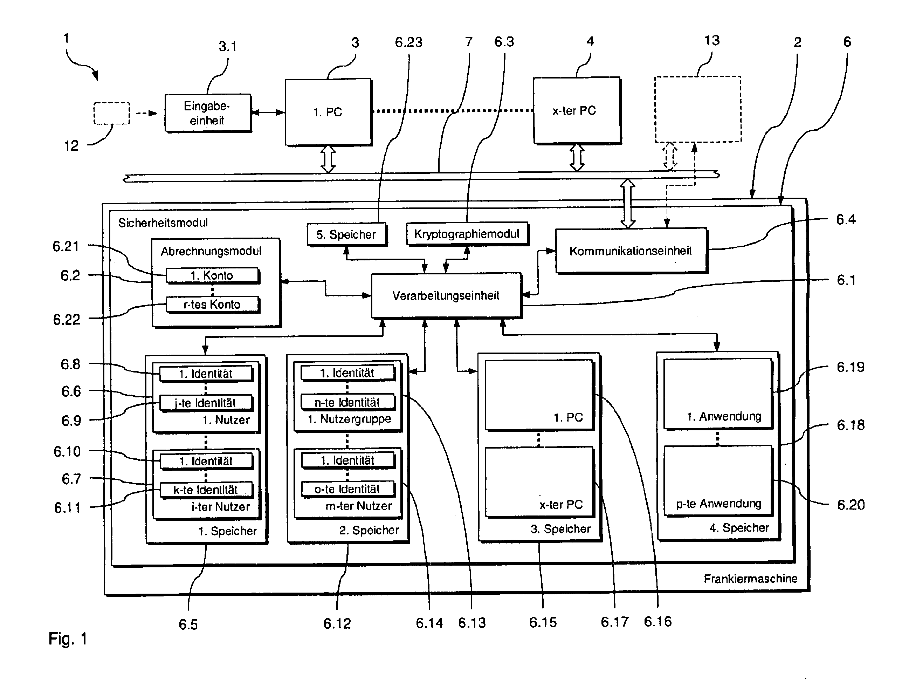

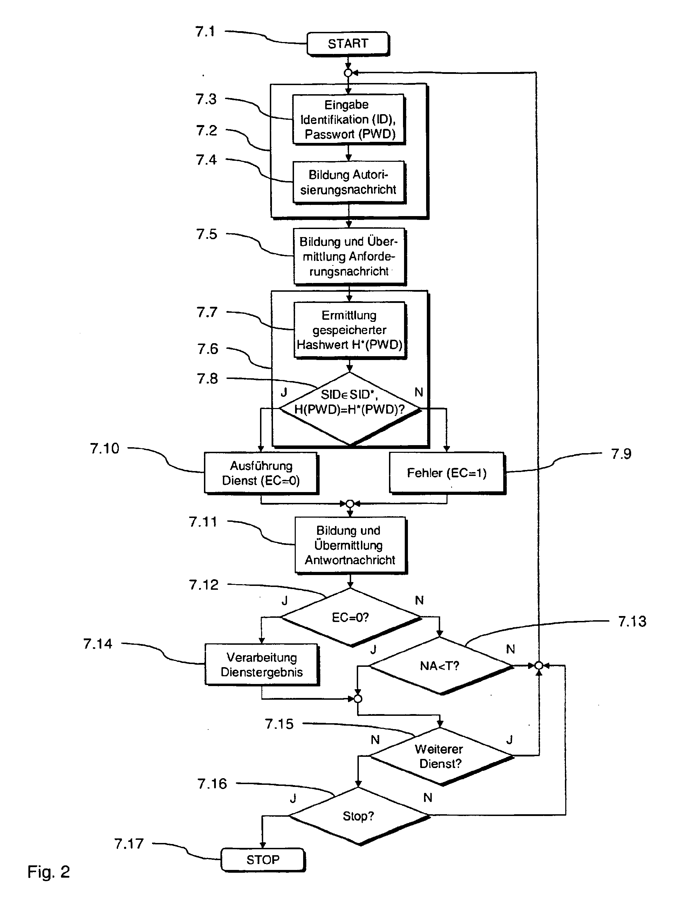

Im Folgenden wird unter Bezugnahme auf die Figuren 1 bis 5 eine bevorzugte Ausführungsform der erfindungsgemäßen Anordnung 1 zur Bereitstellung von sicherheitsrelevanten Diensten beschrieben, mit welcher eine bevorzugte Variante des erfindungsgemäßen Verfahrens zur Bereitstellung von sicherheitsrelevanten Diensten durchgeführt wird.

Wie Figur 1 zu entnehmen ist, umfasst die Anordnung 1 eine Frankiermaschine 2 und eine Reihe von x Datenverarbeitungseinrichtungen in Form von Personalcomputern (PC) 3, 4. Die PCs 3, 4 können jeweils über eine Kommunikationsverbindung, beispielsweise ein Datennetz 5, mit der Frankiermaschine 2 verbunden werden.

Die Frankiermaschine 2 umfasst neben den üblichen, zur Frankierung von Poststücken erforderlichen - in Figur 1 nicht dargestellten - Komponenten unter anderem ein Sicherheitsmodul 6. Dieses Sicherheitsmodul 6 dient in üblicher Weise dazu, die für die Frankierung erforderlichen sicherheitsrelevanten postalischen Dienste, wie beispielsweise die sichere Abrechnung der Frankierwerte aber auch die kryptographische Absicherung bestimmter postalischer Daten, zur Verfügung zu stellen.

Für die sichere Abrechnung der Frankierwerte umfasst das Sicherheitsmodul 6 in einem physikalisch und logisch vor unbefugtem Zugriff gesicherten Bereich neben einer zentralen Verarbeitungseinheit 6.1 ein Abrechnungsmodul 6.2 in Form einer Speichereinrichtung, die mit der Verarbeitungseinheit 6.1 verbunden ist und in der entsprechende - gegebenenfalls redundant vorhandene - Register für die Speicherung der Abrechnungsdaten angelegt sind.

Für die kryptographische Absicherung von Daten umfasst das Sicherheitsmodul 6 ein so genanntes Kryptographiemodul 6.2 in Form eines Speichers, der mit der Verarbeitungseinheit 6.1 verbunden ist und in dem entsprechende kryptographische Algorithmen und Parameter abgelegt sind, auf welche die Verarbeitungseinheit 6.1 zur Durchführung kryptographischer Operationen zugreift.

Um die Kapazitäten des Sicherheitsmoduls 6 im Hinblick auf die Bereitstellung sicherheitsrelevanter Dienste besser ausschöpfen zu können, kann das Sicherheitsmodul 6 über das Datennetz 5 mit den PCs 3, 4 über eine Kommunikationseinheit 6.4 kommunizieren. Diese Kommunikationseinheit 6.4 ist im gezeigten Beispiel eine Komponente des Sicherheitsmoduls 6, es versteht sich jedoch, dass die Kommunikation bei anderen Varianten der Erfindung auch über entsprechende Einheiten der Frankiermaschine 2 erfolgen kann, die nicht zum Sicherheitsmodul 6 gehören.

Wie im Folgenden anhand des PCs 3 erläutert werden soll, können auf dem jeweiligen PC Anwendungen zur Datenverarbeitung ausgeführt werden, die von dem Sicherheitsmodul 6 die Bereitstellung eines oder mehrerer sicherheitsrelevanter Dienste gemäß dem nachfolgend erläuterten erfindungsgemäßen Verfahren anfordern.

Zunächst wird in einem Schritt 7.1 der Verfahrensablauf, beispielsweise durch Aufruf einer ersten Anwendung zur Datenverarbeitung, gestartet. An einem bestimmten Punkt im Ablauf der ersten Anwendung, beispielsweise automatisch oder auf eine bestimmte Eingabe des Nutzers der ersten Anwendung hin, fordert die erste Anwendung in einem Autorisierungsschritt 7.2 die Autorisierung für die Durchführung eines sicherheitsrelevanten Dienstes durch das Sicherheitsmodul 6 an.

In einem ersten Teilschritt 7.3 des Autorisierungsschritts 7.2 wird der Nutzer der ersten Anwendung zunächst zur Eingabe einer Identifikation ID des Nutzers und einer ersten Autorisierungsinformation des Nutzers aufgefordert. Die erste Autorisierungsinformation kann dabei beliebig gestaltet sein.

Im vorliegenden Beispiel ist die erste Autorisierungsinformation ein Passwort PWD, das von dem Nutzer des ersten PCs über eine entsprechende Eingabeeinrichtung 3.1 in den PC 3 eingegeben wird. Die Eingabeeinrichtung 3.1 kann eine einfache Tastatur oder ein anderes Eingabegerät sein. Im besonders einfach zu realisierenden Fall der Eingabe des Passworts wird das Passwort von dem Nutzer der ersten Anwendung durch manuelle Eingabe oder durch Auslesen einer Speichereinrichtung an die erste Anwendung übergeben wird. Das Auslesen der Speichereinrichtung kann einfach dadurch geschehen, dass der betreffende Speicher mit dem PC 3 verbunden wird, beispielsweise eine Chip-Karte oder dergleichen in eine dann als Kartenleser ausgebildete Eingabeeinrichtung 3.1 eingeführt wird, wie in Figur 1 durch die gestrichelte Kontur 12 angedeutet st. Ebenso kann das Auslesen der Speichereinrichtung natürlich auch berührungslos erfolgen. Bei dem Passwort kann es sich im Übrigen um einen beliebigen Datenstring beliebigen Inhalts handeln.

Bei besonders sicheren Varianten der Erfindung ist die Autorisierungsinformation ein biometrisch erfasstes Merkmal des Nutzers der ersten Anwendung. Dieses biometrische Merkmal wird der ersten Anwendung dann bevorzugt durch eine als biometrischer Sensor ausgebildete Eingabeeinrichtung 3.1 übergeben, die das entsprechende biometrische Merkmal des Nutzers der ersten Anwendung erfasst hat.

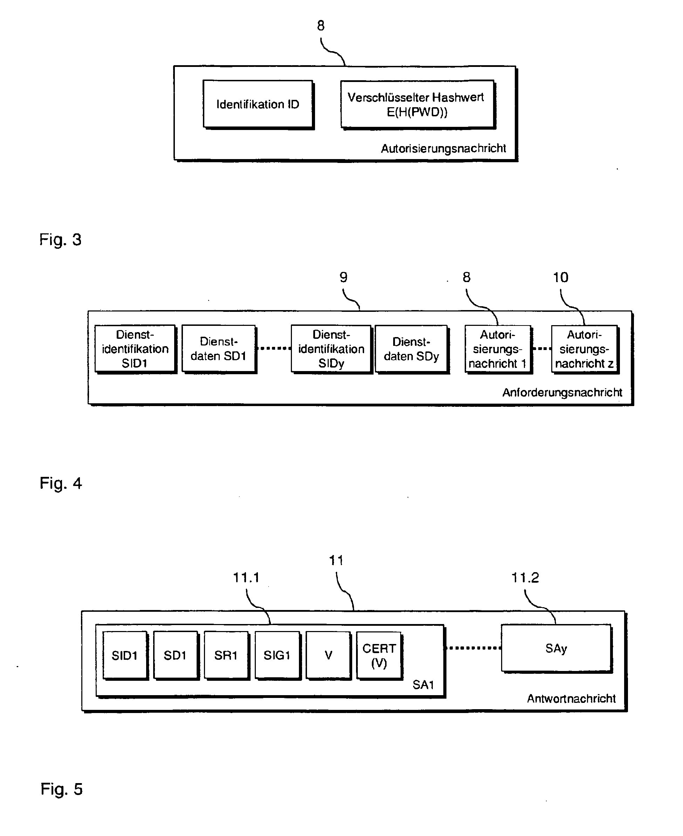

Die eingegebene Identifikation ID und das Passwort PWD werden in dem PC 3 durch die erste Anwendung in einem zweiten Teilschritt 7.4 des Autorisierungsschritts 7.2 zu einer ersten Autorisierungsnachricht 8 zusammengestellt. Dabei wird zunächst das Passwort PWD mittels einer Hashfunktion in eine zweite Autorisierungsinformation H(PWD) umgewandelt und mittels eines geeigneten Verschlüsselungsalgorithmus verschlüsselt. Die verschlüsselte zweite Autorisierungsinformation E(H(PWD)) und die Identifikation ID werden dann zu der Autorisierungsnachricht 8 zusammengefügt (siehe Figur 3).

Die Verwendung eines Hashwertes bewirkt dabei zum einen eine Reduktion der zu übermittelnden Datenmenge. Zum anderen bewirkt sie ebenso wie die Verschlüsselung einen Schutz der Autorisierungsinformation vor unbefugter Einsicht und unerkannter Manipulation.

In einem Anforderungsschritt 7.5 wird dann eine Anforderungsnachricht 9 gebildet und an das Sicherheitsmodul 6 übermittelt. Die Anforderungsnachricht 9 umfasst neben der Autorisierungsnachricht 8 eine Identifikation SID1 des ersten Dienstes sowie gegebenenfalls Dienstdaten SD1, welche der erste Dienst verarbeiten soll bzw. zu seiner Durchführung benötigt.

Weiterhin kann die Anforderungsnachricht 9 für wenigstens einen weiteren angeforderten sicherheitsrelevanten y-ten Dienst jeweils eine weitere Identifikation SIDy des y-ten Dienstes sowie gegebenenfalls Dienstdaten Sdy umfassen, welche der y-te Dienst verarbeiten soll bzw. zu seiner Durchführung benötigt. Hierbei versteht es sich, dass die Anforderungsnachricht 9 gegebenenfalls eine oder mehrere weitere Autorisierungsnachrichten 10 umfassen kann, sofern einer der weiteren angeforderten Dienste, beispielsweise der *y*-te Dienst eine anderweitige Autorisierung benötigt.

Die weitere z-te Autorisierungsnachricht 10 kann wie die erste Autorisierungsnachricht 8 gebildet werden. Hierbei kann die Autorisierung gegebenenfalls auch nicht an den Nutzer der ersten Anwendung sondern an eine Nutzergruppe, welcher der Nutzer angehört, bzw. den ersten PC 3 bzw. die erste Anwendung gebunden sein. In diesem Fall wird die z-te Autorisierungsnachricht 10 unter Verwendung einer Identifikation der Nutzergruppe bzw. des ersten PCs 3 bzw. der ersten Anwendung und einer entsprechenden Autorisierungsinformation der Nutzergruppe bzw. des ersten PCs 3 bzw. der ersten Anwendung erstellt. Die entsprechende Identifikation und Autorisierungsinformation kann dabei vom Nutzer eingegeben bzw. jeweils in dem ersten PC 3 bzw. der ersten Anwendung gespeichert sein und durch die erste Anwendung automatisch ausgelesen werden.

In einem Verifikationsschritt 7.6 verifiziert das Sicherheitsmodul 6 dann die Berechtigung zur Anforderung des ersten Dienstes. Zunächst wird hierzu in einem ersten Teilschritt 7.7 des Verifikationsschritts 7.6 aus der übermittelten Identifikation ID des Nutzers ein dem Nutzer zugeordneter erster Speicherbereich 6.6 eines ersten Speichers 6.5 des Sicherheitsmoduls 6 identifiziert (vgl. Figur 1).

In dem ersten Speicher 6.5 ist für eine Mehrzahl von i unterschiedlichen Nutzern jeweils ein eigener Speicherbereich 6.6, 6.7 definiert. In jedem Speicherbereich ist für den jeweiligen Nutzer wenigstens ein Unterbereich 6.8, 6.9 bzw. 6.10, 6.11 vorgesehen in dem jeweils eine Identität des Nutzers abgelegt ist. Jede Identität wurde im Rahmen einer vorangegangenen Anmelde- oder Ergänzungsvorgangs für den Nutzer angelegt. Jede Identität umfasst im vorliegenden Beispiel eine dem betreffenden Nutzer zugeordnete Nutzer-Identifikation und eine dieser Identität zugeordnete Nutzer-Autorisierungsinformation, welche - bei Verwendung dieser Identität - die Berechtigung des Nutzers zur Vornahme bestimmter Handlungen oder zum Empfang bestimmter Leistungen belegt. Wie Figur 1 zu entnehmen ist, sind für den ersten Nutzer, der im vorliegenden Beispiel der Nutzer des ersten PCs 3 sein soll, in dem Speicherbereich 6.6*j* Identitäten abgelegt, während für den *i*-ten Nutzerin dem Speicherbereich 6.7 *k* Identitäten abgelegt sind.

Hierbei kann vorgesehen sein, dass für unterschiedliche sicherheitsrelevante Dienste des Sicherheitsmoduls 6 unterschiedliche Identitäten abgelegt sind. Im vorliegenden Fall umfasst die jeweilige Identität eine Information SID*, welcher bzw. welche sicherheitsrelevante Dienste dem Nutzer bei erfolgreicher Autorisierung zur Verfügung stehen oder nicht. Im einfachsten Fall kann aber auch allgemein festgelegt sein, dass dem Nutzer bei erfolgreicher Autorisierung alle sicherheitsrelevanten Dienste des Sicherheitsmoduls 6 zur Verfügung stehen.

In dem ersten Teilschritt 7.7 wird aus der übermittelten Identifikation ID des Nutzers (und gegebenenfalls der Dienstidentifikation SID) dann die dieser Identifikation ID (und gegebenenfalls diesem Dienst) entsprechende Identität des Nutzers identifiziert und so die zugehörige gespeicherte Nutzer-Autorisierungsinformation ermittelt. Im vorliegenden Beispiel ist die gespeicherte Nutzer-Autorisierungsinformation ein Hashwert eines dieser Identität des ersten Nutzers zugeordneten Passworts H*(PWD). Es versteht sich jedoch, dass bei anderen Varianten der Erfindung aber auch beliebige andere Autorisierungsinformationen verwendet werden können.

In einem zweiten Teilschritt 7.8 des Verifikationsschritts 7.6 wird die so ermittelte gespeicherte Nutzer-Autorisierungsinformation H*(PWD) dann im Sicherheitsmodul 6 mit der übermittelten und durch das Sicherheitsmodul 6 zuvor wieder entschlüsselten zweiten Autorisierungsinformation H(PWD) verglichen. Weiterhin wird anhand der übermittelten Dienstidentifikation SID und der entsprechenden Information SID* in der gespeicherten Identität überprüft, ob der betreffende Dienst dem Benutzer überhaupt zur Verfügung steht, die übermittelte Dienstidentifikation SID also beispielsweise Element bzw. Bestandteil der gespeicherten Information SID* ist (SID∈SID*).

Liegt eine vorgegebene Beziehung zwischen der übermittelten zweiten Autorisierungsinformation H(PWD) und der gespeicherten Nutzer-Autorisierungsinformation H*(PWD) vor und wurde festgestellt dass der angeforderte Dienst dem ersten Nutzer zur Verfügung steht (d. h. SID∈SID*), so wurde die Berechtigung des ersten Nutzers zur Anforderung des ersten Dienstes erfolgreich verifiziert. andernfalls ist die Verifizierung fehlgeschlagen.

Es versteht sich hierbei, dass die Überprüfung des Vorliegens der vorgegebenen Beziehung zwischen der übermittelten zweiten Autorisierungsinformation H(PWD) und der gespeicherten Nutzer-Autorisierungsinformation H*(PWD) auch entfallen kann, wenn schon anhand der übermittelten Dienstidentifikation SID festgestellt werden kann, dass der angeforderte Dienst dem ersten Nutzer nicht zur Verfügung steht.

Im vorliegenden Fall muss für die erfolgreiche Verifizierung die Identität zwischen der übermittelten zweiten Autorisierungsinformation und der gespeicherten Nutzer-Autorisierungsinformation, d. h. H*(PWD)=H*(PWD), festgestellt werden. Es versteht sich jedoch, dass bei anderen Varianten auch eine beliebige andere vorgegebene Beziehung zwischen der übermittelten zweiten Autorisierungsinformation und der gespeicherten Nutzer-Autorisierungsinformation für die erfolgreiche Verifizierung erforderlich sein kann.

Liegt die vorgegebene Beziehung zwischen dem übermittelten zweiten Autorisierungsinformation H(PWD) und der gespeicherten Nutzer-Autorisierungsinformation H*(PWD) nicht vor oder wurde festgestellt, dass der angeforderte Dienst dem ersten Nutzer nicht zur Verfügung steht, so wird in einem Schritt 7.9 ein Fehler festgestellt und ein Fehlercode EC=1 gesetzt.

Andernfalls wird in einem Bereitstellungsschritt 7.10 der Fehlercode EC=0 gesetzt und der erste Dienst auf Basis der mit der Anforderungsnachricht 9 übermittelten Dienstdaten SD1 durchgeführt.

Das gleiche Vorgehen erfolgt auch für die mit der Anforderungsnachricht 9 gegebenenfalls angeforderten weiteren Dienste. Hierbei ist anzumerken, dass analog zu den unterschiedlichen Identitäten einzelner Nutzer im Sicherheitsmodul 6 für unterschiedliche Nutzergruppen ebenso wie für unterschiedliche PCs und unterschiedliche anfordernde Anwendungen in entsprechenden Speichern gegebenenfalls unterschiedliche Identitäten abgelegt sein können.

So ist in einem zweiten Speicher 6.12 für eine Mehrzahl von m unterschiedlichen Nutzergruppen jeweils ein eigener Speicherbereich 6.13, 6.14 definiert. In jedem Speicherbereich 6.13, 6.14 ist für die jeweilige Nutzergruppe wenigstens ein Unterbereich vorgesehen in dem jeweils eine Identität der Nutzergruppe abgelegt ist. Jede Identität wurde im Rahmen einer vorangegangenen Anmelde- oder Ergänzungsvorgangs für die Nutzergruppe angelegt. Jede Identität umfasst im vorliegenden Beispiel eine der betreffenden Nutzergruppe zugeordnete Nutzergruppen-Identifikation und eine dieser Identität zugeordnete Nutzergruppen-Autorisierungsinformation, welche - bei Verwendung dieser Identität - die Berechtigung des Nutzergruppe zur Vornahme bestimmter Handlungen oder zum Empfang bestimmter Leistungen belegt. Wie Figur 1 zu entnehmen ist, sind für die erste Nutzergruppe in dem Speicherbereich 6.13 n Identitäten abgelegt, während für die m-te Nutzergruppe in dem Speicherbereich 6.14 o Identitäten abgelegt sind.

Ebenso ist in einem dritten Speicher 6.15 für die x unterschiedlichen PCs 3, 4 jeweils ein eigener Speicherbereich 6.16, 6.17 definiert. In jedem Speicherbereich 6.16, 6.17 ist für den jeweiligen PC 3, 4 wenigstens ein Unterbereich vorgesehen in dem jeweils eine Identität des PCs 3, 4 abgelegt ist. Jede Identität wurde im Rahmen einer vorangegangenen Anmelde-oder Ergänzungsvorgangs für den PC 3, 4 angelegt. Jede Identität umfasst im vorliegenden Beispiel eine dem betreffenden PC zugeordnete PC-Identifikation und eine dieser Identität zugeordnete PC-Autorisierungsinformation, welche - bei Verwendung dieser Identität - die Berechtigung des PCs zur Vornahme bestimmter Handlungen oder zum Empfang bestimmter Leistungen belegt.

Schließlich ist in einem vierten Speicher 6.18 für die p unterschiedliche sicherheitsrelevante Dienste anfordernde Anwendungen jeweils ein eigener Speicherbereich 6.19, 6.20 definiert. In jedem Speicherbereich 6.19, 6.20 ist für die jeweilige Anwendung wenigstens ein Unterbereich vorgesehen in dem jeweils eine Identität der Anwendung abgelegt ist. Jede Identität wurde im Rahmen einer vorangegangenen Anmelde- oder Ergänzungsvorgangs für die Anwendung angelegt. Jede Identität umfasst im vorliegenden Beispiel eine der betreffenden Anwendung zugeordnete Anwendungsidentifikation und eine dieser Identität zugeordnete Anwendungsautorisierungsinformation, welche - bei Verwendung dieser Identität - die Berechtigung der Anwendung zur Vornahme bestimmter Handlungen oder zum Empfang bestimmter Leistungen belegt.

Wurden sämtliche auszuführenden Dienste in dem Schritt 7.10 ausgeführt, so wird von dem Sicherheitsmodul 6 in einem Schritt 7.11 eine Antwortnachricht 11 generiert und an die aufrufende Anwendung, also den betreffenden PC 3, 4, übermittelt. Diese Antwortnachricht umfasst für jeden angeforderten ersten bis y-ten Dienst eine Dienstantwort SA, d. h. SA1 bis SAy bzw. 11.1, 11.2 (vgl. Figur 5). Diese Dienstantwort SA setzt sich zusammen aus der Dienstidentifikation SID, den Dienstdaten SD, einem Dienstergebnis SR, einer digitale Signatur SIG(SID, SD, SR) des Sicherheitsmoduls 6 über SID, SD, SR, dem Verifizierungsschlüssel V für die Signatur SIG(SID, SD, SR) und einem digitalen Zertifikat CERT(V) für den Verifizierungsschlüssel V. Je nach Art des Dienstes umfasst das Dienstergebnis SR wenigstens den Fehlercode EC für den jeweiligen Dienst. Soll der Dienst Daten an die aufrufende Anwendung zurück liefern, enthält das Dienstergebnis SR gegebenenfalls auch diese Daten.

Die aufrufende Anwendung überprüft nach Verifizierung der jeweiligen Signatur SIG(SID, SD, SR) in einem Schritt 7.12, ob für einen der angeforderten Dienste ein Fehlercode EC=1 übermittelt wurde. Ist dies der Fall, wird in einem Schritt 7.13 überprüft, ob eine Abbruchschwelle T für die Anzahl der Versuche NA einer Anforderung des Dienstes bzw. der Autorisierung bereits erreicht wurde. Ist dies nicht der Fall wird für den betreffenden Dienst zurück zu Schritt 7.2 gesprungen.

Für die Dienste, für die der Fehlercode EC=0 ist, erfolgt in einem Schritt 7.14 die Verarbeitung des Dienstergebnisses SR durch die aufrufende Anwendung, sofern der betreffende Dienst überhaupt zu verarbeitende Daten liefern soll.

Nach Verarbeitung des Dienstergebnisses SR wird in einem Schritt 7.15 dann durch die aufrufende Anwendung überprüft, ob ein weiterer Dienst angefordert werden soll. Gleiches geschieht, wenn in dem Schritt 7.12 das Erreichen der Abbruchschwelle T festgestellt wird, wobei dann die Anforderung des Dienstes, für den die Abbruchschwelle T erreicht wurde bis zum Eintreten vorgegebener zeitlicher oder nicht zeitlicher Bedingungen gesperrt wird.

Soll ein weiterer Dienst von dem Sicherheitsmodul 6 angefordert werden, wird zu Schritt 7.2 zurück gesprungen. Andernfalls wird in einem Schritt 7.16 durch die aufrufende Anwendung überprüft, ob der Verfahrensablauf beendet werden soll. Ist dies nicht der Fall, wird zu Schritt 7.2 zurück gesprungen. Andernfalls wird der Verfahrensablauf in einem Schritt 7.17 beendet.

Bei bevorzugten Varianten des erfindungsgemäßen Verfahrens ist vorgesehen, dass das Sicherheitsmodul 6 in einem während und/oder nach dem Bereitstellungsschritt 7.10 erfolgenden Abrechnungsschritt eine Abrechnung für die Bereitstellung des ersten Dienstes vornimmt. Hierdurch kann in einfacher Weise ein Bezahlsystem für die Nutzung des betreffenden Dienstes implementiert werden. Vorzugsweise ist vorgesehen, dass in dem Abrechnungsschritt der Inhalt des Abrechnungsmoduls 6.2 des Sicherheitsmoduls 6 modifiziert wird. Dabei kann das Abrechnungsmodul 6.2 getrennte Bereiche für die postalischen Register und die Register für die Abrechnung der über einen PC 3, 4 angeforderten Dienste aufweisen, Im einfachsten Fall, kann die Abrechnung aber auch ausschließlich unter Verwendung der postalischen Register erfolgen.

Für die Abrechnung können im Abrechnungsmodul r unterschiedliche Konten 6.21, 6.22 vorgesehen sein, die unterschiedlichen Nutzern, unterschiedlichen Nutzergruppen, unterschiedlichen PCs und/oder unterschiedlichen anfordernden Anwendungen zugeordnet sind. Im einfachsten Fall erfolgt die Abrechnung für den Dienst dann auf das Konto desjenigen, dessen Autorisierung bei der Dienstanforderung verifiziert wurde.

Bei dem ersten Dienst kann es sich um einen beliebigen sicherheitsrelevanten Dienst handeln, bei dem sicherheitsrelevante Operationen ausgeführt werden. Bevorzugt umfasst der erste Dienst die Verschlüsselung und/oder die Entschlüsselung und/oder die digitale Signierung und/oder die digitale Zertifizierung und/oder die digitale Verifizierung von Daten, die hierzu von der ersten Anwendung an das Sicherheitsmodul 6 übermittelt werden. Ebenso kann es sich um weitere Dienste im Zusammenhang mit dem Management digitaler Zertifikate handeln, beispielsweise den Widerruf digitaler Zertifikate etc.

So kann es sich bei der ersten Anwendung beispielsweise um ein e-mail-Programm handeln, welches auf dem PC 3 ausgeführt wird, und bei dem ersten Dienst beispielsweise um die individuell abrufbare oder automatische Ver- und Entschlüsselung des e-mail-Verkehrs, der über dieses e-mail-Programm abgewickelt wird. Selbstverständlich kann es sich bei einem anderen ersten Dienst in diesem Zusammenhang auch um die digitale Signierung und Signaturverifizierung des e-mail-Verkehrs handeln, der über dieses e-mail-Programm abgewickelt wird. Ebenso kann es sich bei der ersten Anwendung beispielsweise um ein Datenverwaltungsprogramm handeln, welches auf dem PC 3 ausgeführt wird, und bei dem ersten Dienst beispielsweise um die individuell abrufbare oder automatische Ver- und Entschlüsselung bzw. digitale Signierung und Signaturverifizierung der verwalteten Daten.

Weiterhin kann es sich bei der ersten Anwendung eine Anwendung handeln, mit der Managementfunktionen in einer kryptographischen Hierarchie, beispielsweise einer Zertifizierungsinstanz - so genannte Certificate Authority (CA) - in einer Public-Key-Infrastruktur, ausgeübt werden können. Der erste Dienst kann dann die Generierung und/oder Zertifizierung von kryptographischen Schlüsseln sein, die auf Anforderung durch die erste Anwendung erfolgt.

Ebenso kann die erste Anwendung eine Anwendung zur Abwicklung von Auktionen oder Bezahlvorgängen oder dergleichen sein und der erste Dienst dann die im Schritt 7.10 erfolgende Generierung eines entsprechend kryptographisch abgesicherten (d.h. verschlüsselten und/oder signierten und/oder zertifizierten) digitalen Zahlungsmittels bzw. Zahlungsbelegs sein, das bzw. der dann im Schritt 7.11 übergeben und im Schritt 7.14 weiter verarbeitet wird.

Dabei können durch das Sicherheitsmodul 6 sowohl Vorausbezahlungssysteme (so genannte Prepayment-Systeme) als auch Kreditsysteme (so genannte Postpayment-Systeme) realisiert werden. Zudem können die Zahlungen wie erwähnt unter anderem über die erfindungsgemäße Verifizierung der Berechtigung sowohl einzelnen Personen als auch Personengruppen, beliebigen Organisationseinheiten oder juristischen Personen zugeordnet werden.

Bei weiteren Varianten der Erfindung umfasst der erste Dienst die Ausgabe einer zweiten Autorisierungsnachricht in dem Schritt 7.11, die eine zweite Identifikation und/oder eine dritte Autorisierungsinformation umfasst, wobei die zweite Autorisierungsnachricht zur Eingabe in die erste Anwendung und/oder eine zweite Anwendung zur Datenverarbeitung vorgesehen ist.

Hiermit ist es beispielsweise möglich, für einen Nutzer mehrere Identitäten mit den zugehörige Passwörtern oder dergleichen im Sicherheitsmodul 6 zu verwalten, die der Nutzer dann über die Autorisierung gegenüber dem Sicherheitsmodul 6 abrufen kann. So kann die zweite Anwendung beispielsweise ein Online-Banking-Programm sein, welches im Rahmen einer Login-Routine die erste Anwendung aufruft. Der erste Dienst kann dann die Ausgabe der für das Login des Online-Banking-Programms erforderlichen Zugangsdaten sein, die als eine der Identitäten im Sicherheitsmodul 6, beispielsweise in dem dem ersten Nutzer zugeordneten Speicherbereich 6.6, gesichert gespeichert sind. Auch hier kann wieder eine entsprechende kryptographisch abgesicherte Ausgabe der Zugangsdaten vorgesehen sein, um die Sicherheit zu erhöhen.

Eine weitere zweite Anwendung kann wiederum in einer Login-Routine die erste Anwendung aufrufen, wobei der erste Dienst dann die Ausgabe der für das Login der weiteren zweite Anwendung erforderlichen Zugangsdaten im Schritt 7.11 ist, die ebenfalls im Sicherheitsmodul 6 als andere Identität gesichert gespeichert sind und sich in der Regel von den Zugangsdaten des Online-Banking-Programms, also der Identität für das Online-Banking-Programm, unterscheiden.

Bei weiteren Varianten der Erfindung umfasst der erste Dienst die Speicherung von Daten, die von der ersten Anwendung an das Sicherheitsmodul 6 übermittelt werden, in einem fünften Speicher 6.23 des Sicherheitsmoduls 6. Hierbei kann es sich unter anderem um die gegebenenfalls entsprechend kryptographisch abgesicherte Protokollierung und/oder Archivierung beliebiger Ereignisse handeln. Insbesondere kann die Protokollierung und/oder Archivierung abrechnungsrelevanter Ereignisse vorgenommen werden, die dann später dazu dienen, bestimmte Abrechnungsvorgänge auszulösen und/oder dort als Beleg verwendet zu werden.

Bei Varianten, bei denen der erste Dienst die Verschlüsselung und/oder digitale Signierung und/oder digitale Zertifizierung von Daten umfasst, die hierzu von der ersten Anwendung an das Sicherheitsmodul 6 übermittelt werden, kann vorgesehen sein, dass hierfür eine eigene kryptographische Hierarchie aufgebaut bzw. verwendet wird. Bevorzugt ist jedoch vorgesehen, dass dies unter Verwendung einer kryptographischen Bindung des Sicherheitsmoduls 6 an eine postalische Public-Key-Infrastruktur erfolgt, sodass keine eigene kryptographische Hierarchie aufgebaut bzw. verwendet werden muss.

Wie bereits oben erwähnt, kann vorgesehen sein, dass das Sicherheitsmodul 6 mehrere Identitäten und zugehörige zweite Autorisierungsinformationen verwaltet. Bei bevorzugten Varianten des erfindungsgemäßen Verfahrens ist daher vorgesehen, dass der erste Dienst die Ausgabe einer zweiten Autorisierungsnachricht umfasst, die eine zweite Identifikation und/oder eine dritte Autorisierungsinformation umfasst, wobei die zweite Autorisierungsnachricht zur Eingabe in die erste Anwendung und/oder eine zweite Anwendung zur Datenverarbeitung vorgesehen ist.

Das Sicherheitsmodul 6 nimmt die Generierung der zweiten Autorisierungsnachricht in diesem Fall in Abhängigkeit von der ersten Anwendung und/oder der Datenverarbeitungseinrichtung und/oder dem Nutzer der ersten Anwendung vor, die dem Sicherheitsmodul 6 mit den Dienstdaten SD bzw. der Autorisierungsnachricht 8, 10 mitgeteilt werden.

Hierbei kann es vorgesehen sein, dass der erste Dienst durch eine Mehrzahl erster Anwendungen aufgerufen werden kann. Das Sicherheitsmodul 6 umfasst dann in dem ersten Speicher 6.5 für wenigstens einen Nutzer und/oder in dem zweiten Speicher 6.12 für wenigstens einen PC 3, 4 eine Mehrzahl von Identitäten, die jeweils einer der ersten Anwendungen zugeordnet sind. Zur Generierung der zweiten Autorisierungsnachricht wird dann derjenige Speichereintrag, also die Identität, verwendet, welcher der aktuell anfordernden ersten Anwendung zugeordnet ist.

Die PCs sind im vorliegenden Beispiel über das Datennetzwerk 7, beispielsweise ein LAN, WAN, Internet etc., mit dem Sicherheitsmodul 6 der Frankiermaschine 2 verbunden. Es versteht sich jedoch, dass bei anderen Varianten der Erfindung auch eine direkte Punkt-zu-Punkt-Verbindung des Sicherheitsmoduls 6 mit einem PC vorgesehen sein kann, wie dies in Figur 1 durch die gestrichelte Kontur 13 angedeutet ist. Dieser PC 13 kann dann, wie ebenfalls angedeutet ist, gegebenenfalls mit anderen PCs über ein Datennetzwerk (LAN, WAN, Internet etc.) verbunden sein und diesen so den Zugang zum Sicherheitsmodul 6 ermöglichen.

Es sei and dieser Stelle erwähnt, dass die vorstehend beschriebenen Speicher des Sicherheitsmoduls 6 alle oder zum Teil sowohl als separate Speichermodule als auch lediglich als einzelne Speicherbereiche eines einzigen Speichermoduls ausgebildet sein können.

Die vorliegende Erfindung wurde vorstehend anhand von Beispielen mit PCs beschrieben. Es versteht sich jedoch, dass sie auch in Verbindung mit beliebigen anderen Datenverarbeitungseinrichtungen zum Einsatz kommen kann.

## Patentansprüche

1. Verfahren zum Bereitstellen wenigstens eines sicherheitsrelevanten Dienstes durch ein Sicherheitsmodul (6) einer Frankiermaschine (2) für wenigstens eine erste Anwendung zur Datenverarbeitung, die auf einer mit der Frankiermaschine (2) verbindbaren Datenverarbeitungseinrichtung (3, 4) ausgeführt wird, bei dem
- die erste Anwendung in einem Anforderungsschritt (7.5) einen sicherheitsrelevanten ersten Dienst von dem Sicherheitsmodul (6) anfordert und
- das Sicherheitsmodul (6) in einem dem Anforderungsschritt (7.5) nachfolgenden Bereitstellungsschritt (7.10) den ersten Dienst bereit stellt,
**dadurch gekennzeichnet, dass**
- das Sicherheitsmodul (6) in einem dem Bereitstellungsschritt (7.10) vorangehenden Verifikationsschritt (7.6) eine Berechtigung der ersten Anwendung zur Anforderung des ersten Dienstes verifiziert, wobei
- der erste Dienst die Ausgabe einer Autorisierungsnachricht umfasst, die eine in dem Sicherheitsmodul (6) gespeicherte Identifikation und/oder eine in dem Sicherheitsmodul (6) gespeicherte Autorisierungsinformation umfasst, wobei die Autorisierungsnachricht zur Eingabe als Zugangsdaten in und für die erste Anwendung und/oder eine zweite Anwendung zur Datenverarbeitung vorgesehen ist, und
- die Generierung der Autorisierungsnachricht in Abhängigkeit von der ersten Anwendung und/oder der Datenverarbeitungseinrichtung (3, 4) und/oder dem Nutzer der ersten Anwendung erfolgt.

2. Verfahren nach Anspruch 1, **dadurch gekennzeichnet, dass** die erste Anwendung eine nicht-postalische Anwendung zur Datenverarbeitung ist und/oder der erste Dienst ein nicht-postalischer Dienst ist.

3. Verfahren nach Anspruch 1 oder 2, **dadurch gekennzeichnet, dass** das Sicherheitsmodul (6) in dem Verifikationsschritt (7.6) zur Verifizierung der Berechtigung zur Anforderung des ersten Dienstes
- eine zu übermittelnde Autorisierungsinformation der ersten Anwendung verifiziert
und
- insbesondere zusätzlich eine zu übermittelnde Autorisierungsinformation der Datenverarbeitungseinrichtung und/oder des Nutzers der ersten Anwendung verifiziert.

4. Verfahren nach Anspruch 3, **dadurch gekennzeichnet, dass** in einem dem Verifikationsschritt (7.6) vorangehenden Autorisierungsschritt (7.2)
- das Sicherheitsmodul die zu übermittelnde Autorisierungsinformation der ersten Anwendung von der ersten Anwendung anfordert und
- insbesondere die zusätzlich zu übermittelnde Autorisierungsinformation der Datenverarbeitungseinrichtung (3, 4) und/oder des Nutzers der ersten Anwendung von der ersten Anwendung anfordert
und/oder
- die erste Anwendung die zu übermittelnde Autorisierungsinformation der ersten Anwendung an das Sicherheitsmodul (6) übermittelt und
- insbesondere die erste Anwendung die zusätzlich zu übermittelnde Autorisierungsinformation der Datenverarbeitungseinrichtung (3, 4) und/oder des Nutzers der ersten Anwendung an das Sicherheitsmodul (6) übermittelt.

5. Verfahren nach Anspruch 3 oder 4 , **dadurch gekennzeichnet, dass** in dem Autorisierungsschritt (7.2)
- die erste Anwendung den Nutzer der ersten Anwendung zur Eingabe einer durch den Nutzer einzugebenden Autorisierungsinformation auffordert
und
- die durch den Nutzer einzugebende Autorisierungsinformation als zu übermittelnde Autorisierungsinformation von der ersten Anwendung an das Sicherheitsmodul (6) weitergeleitet wird
und/oder
- die erste Anwendung unter Verwendung der durch den Nutzer einzugebenden Autorisierungsinformation eine weitere zu übermittelnde Autorisierungsinformation generiert und an das Sicherheitsmodul (6) weiterleitet.

6. Verfahren nach einem der Ansprüche 3 bis 5, **dadurch gekennzeichnet, dass** die zu übermittelnde Autorisierungsinformation durch kryptographische Mittel abgesichert an das Sicherheitsmodul (6) übermittelt wird.

7. Verfahren nach Anspruch 6, **dadurch gekennzeichnet, dass** die erste Anwendung die zu übermittelnde Autorisierungsinformation vor der Übermittlung an das Sicherheitsmodul (6) durch kryptographische Mittel absichert.

8. Verfahren nach Anspruch 6 oder 7, **dadurch gekennzeichnet, dass** zur kryptographischen Absicherung der zu übermittelnden Autorisierungsinformation wenigstens ein durch eine Hash-Funktion generierter Hashwert der zu übermittelnden Autorisierungsinformation und/oder eine Verschlüsselung der zu übermittelnden Autorisierungsinformation und/oder eine digitale Signatur über der zu übermittelnden Autorisierungsinformation verwendet wird.

9. Verfahren nach einem der Ansprüche 3 bis 8, **dadurch gekennzeichnet, dass** in dem Autorisierungsschritt an das Sicherheitsmodul (6) eine weitere Autorisierungsnachricht übermittelt wird, welche
die zu übermittelnde Autorisierungsinformation und eine Identifikation der ersten Anwendung umfasst und
- insbesondere zusätzlich eine Identifikation der Datenverarbeitungseinrichtung (3, 4) und/oder des Nutzers der ersten Anwendung umfasst.

10. Verfahren nach Anspruch 9, **dadurch gekennzeichnet, dass**
- die erste Anwendung in dem Autorisierungsschritt (7.2) zumindest die zu übermittelnde Autorisierungsinformation der weiteren Autorisierungsnachricht verschlüsselt und
- das Sicherheitsmodul (6) in dem Verifikationsschritt (7.6)
- zumindest die zu übermittelnde Autorisierungsinformation der weiteren Autorisierungsnachricht entschlüsselt,
- anhand der Identifikation aus der weiteren Autorisierungsnachricht eine gespeicherte, der ersten Anwendung und/oder der Datenverarbeitungseinrichtung (3, 4) und/oder dem Nutzer der ersten Anwendung zugeordnete Vergleichs-Autorisierungsinformation ermittelt,
- zur Verifikation der Autorisierung die gespeicherte Vergleichs-Autorisierungsinformation mit der entschlüsselten zu übermittelnden Autorisierungsinformation vergleicht und
- das Sicherheitsmodul (6) bei Vorliegen einer vorgegebenen Beziehung zwischen der gespeicherten Vergleichs-Autorisierungsinformation und der entschlüsselten zu übermittelnden Autorisierungsinformation in dem Bereitstellungsschritt (7.10) den ersten Dienst bereit stellt.

11. Verfahren nach einem der Ansprüche 3 bis 10, **dadurch gekennzeichnet, dass** die zu übermittelnde Autorisierungsinformation ein Passwort und/oder ein biometrisch erfasstes Merkmal des Nutzers der ersten Anwendung umfasst.

12. Verfahren nach Anspruch 11, **dadurch gekennzeichnet, dass**
- die zu übermittelnde Autorisierungsinformation ein Passwort umfasst und
- das Passwort von dem Nutzer der ersten Anwendung durch manuelle Eingabe oder durch Auslesen einer Speichereinrichtung (12) an die erste Anwendung übergeben wird.

13. Verfahren nach Anspruch 11 oder 12, **dadurch gekennzeichnet, dass**
- die zu übermittelnde Autorisierungsinformation ein biometrisches Merkmal des Nutzers der ersten Anwendung umfasst und
- das biometrische Merkmal der ersten Anwendung durch einen biometrischen Sensor (3.1) übergeben wird, der das entsprechende biometrische Merkmal des Nutzers der ersten Anwendung erfasst hat.

14. Verfahren nach einem der Ansprüche 3 bis 13, **dadurch gekennzeichnet, dass** die zu übermittelnde Autorisierungsinformation wenigstens einem Nutzer der ersten Anwendung zugeordnet ist.

15. Verfahren nach einem der vorhergehenden Ansprüche, **dadurch gekennzeichnet, dass** das Sicherheitsmodul (6) in einem während und/oder nach dem Bereitstellungsschritt (7.10) erfolgenden Abrechnungsschritt eine Abrechnung für die Bereitstellung des ersten Dienstes vornimmt.

16. Verfahren nach Anspruch 15, **dadurch gekennzeichnet, dass**
- in dem Abrechnungsschritt der Inhalt eines Abrechnungsspeichers (6.2) des Sicherheitsmoduls (6) modifiziert wird, wobei
- der Abrechnungsspeicher (6.2) ein postalischer Abrechnungsspeicher des Sicherheitsmoduls (6) ist.

17. Verfahren nach einem der vorhergehenden Ansprüche, **dadurch gekennzeichnet, dass** der erste Dienst
- die Verschlüsselung und/oder die Entschlüsselung und/oder die digitale Signierung und/oder die digitale Zertifizierung und/oder die digitale Verifizierung von Daten umfasst, die hierzu von der ersten Anwendung an das Sicherheitsmodul (6) übermittelt werden,
und/oder
- die Speicherung von Daten im Sicherheitsmodul (6) umfasst, die hierzu von der ersten Anwendung an das Sicherheitsmodul (6) übermittelt werden.

18. Verfahren nach Anspruch 17, **dadurch gekennzeichnet, dass** der erste Dienst
- die Verschlüsselung und/oder digitale Signierung und/oder digitale Zertifizierung von Daten umfasst, die hierzu von der ersten Anwendung an das Sicherheitsmodul (6) übermittelt werden, und
- unter Verwendung einer kryptographischen Bindung des Sicherheitsmoduls (6) an eine postalische Public-Key-Infrastruktur erfolgt.

19. Verfahren nach einem der vorhergehenden Ansprüche, **dadurch gekennzeichnet, dass**
- die Bereitstellung des ersten Dienstes für eine Mehrzahl erster Anwendungen vorgesehen ist,
- das Sicherheitsmodul (6) in einem Speicher (6.5, 6.12, 6.15) für wenigstens eine Datenverarbeitungseinrichtung (3, 4) und/oder wenigstens einen Nutzer der Datenverarbeitungseinrichtung (3, 4) eine Mehrzahl von Speichereinträgen umfasst, die jeweils einer der ersten Anwendungen zugeordnet sind,
- jeder der Speichereinträge wenigstens eine Identifikation und/oder eine Autorisierungsinformation umfasst, und
- zur Generierung der Autorisierungsnachricht derjenige Speichereintrag verwendet wird, welcher der aktuell anfordernden ersten Anwendung zugeordnet ist.

20. Anordnung zur Datenverarbeitung mit
- einer Frankiermaschine (2), die ein postalisches Sicherheitsmodul (6) umfasst, und
- wenigstens einer Datenverarbeitungseinrichtung (3, 4), die mit der Frankiermaschine (2) verbindbar ist und zum Ausführen wenigstens einer ersten Anwendung zur Datenverarbeitung ausgebildet ist, wobei
- die erste Anwendung zur Anforderung eines sicherheitsrelevanten ersten Dienstes von dem Sicherheitsmodul (6) ausgebildet ist und
- das Sicherheitsmodul (6) zur der Anforderung nachfolgenden Bereitstellung den ersten Dienstes ausgebildet ist,
**dadurch gekennzeichnet, dass**
- das Sicherheitsmodul (6) zur der Bereitstellung vorangehenden Verifikation einer Berechtigung der ersten Anwendung zur Anforderung des ersten Dienstes ausgebildet ist, wobei
- der erste Dienst die Ausgabe einer Autorisierungsnachricht umfasst, die eine in dem Sicherheitsmodul (6) gespeicherte Identifikation und/oder eine in dem Sicherheitsmodul (6) gespeicherte Autorisierungsinformation umfasst, wobei die Autorisierungsnachricht zur Eingabe als Zugangsdaten in und für die erste Anwendung und/oder eine zweite Anwendung zur Datenverarbeitung vorgesehen ist, und
- das Sicherheitsmodul zur Generierung der Autorisierungsnachricht in Abhängigkeit von der ersten Anwendung und/oder der Datenverarbeitungseinrichtung und/oder dem Nutzer der ersten Anwendung ausgebildet ist.

21. Anordnung nach Anspruch 20, **dadurch gekennzeichnet, dass** die erste Anwendung eine nicht-postalische Anwendung zur Datenverarbeitung ist und der erste Dienst ein nicht-postalischer Dienst ist.

22. Anordnung nach Anspruch 20 oder 21, **dadurch gekennzeichnet, dass** das Sicherheitsmodul (6) zur Verifizierung der Berechtigung zur Anforderung des ersten Dienstes
- zur Verifizierung einer zu übermittelnden Autorisierungsinformation der ersten Anwendung ausgebildet ist und
- insbesondere zur Verifizierung einer zusätzlich zu übermittelnden Autorisierungsinformation der Datenverarbeitungseinrichtung (3, 4) und/oder des Nutzers der ersten Anwendung ausgebildet ist.

23. Anordnung nach Anspruch 22, **dadurch gekennzeichnet, dass**
- das Sicherheitsmodul (6) zur Anforderung der zu übermittelnden Autorisierungsinformation der ersten Anwendung von der ersten Anwendung ausgebildet ist und
- das Sicherheitsmodul (6) insbesondere zur Anforderung der zusätzlich zu übermittelnden Autorisierungsinformation der Datenverarbeitungseinrichtung (3, 4) und/oder des Nutzers der ersten Anwendung von der ersten Anwendung ausgebildet ist
und/oder
- die erste Anwendung zur Übermittlung der zu übermittelnden Autorisierungsinformation der ersten Anwendung an das Sicherheitsmodul (6) ausgebildet ist und
- die erste Anwendung insbesondere zur Übermittlung der zusätzlich zu übermittelnden Autorisierungsinformation der Datenverarbeitungseinrichtung (3, 4) und/oder des Nutzers der ersten Anwendung an das Sicherheitsmodul (6) ausgebildet ist.

24. Anordnung nach Anspruch 22 oder 23, **dadurch gekennzeichnet, dass** die erste Anwendung derart ausgebildet ist, dass
- der Nutzer der ersten Anwendung zur Eingabe einer durch den Nutzer einzugebenden Autorisierungsinformation aufgefordert wird,
und
- die durch den Nutzer einzugebende Autorisierungsinformation als zu übermittelnde Autorisierungsinformation von der ersten Anwendung an das Sicherheitsmodul (6) weitergeleitet wird
und/oder
- unter Verwendung der durch den Nutzer einzugebenden Autorisierungsinformation eine weitere zu übermittelnde Autorisierungsinformation generiert und an das Sicherheitsmodul (6) weitergeleitet wird.

25. Anordnung nach einem der Ansprüche 22 bis 24, **dadurch gekennzeichnet, dass** die an das Sicherheitsmodul (6) zu übermittelnde Autorisierungsinformation durch kryptographische Mittel abgesichert ist.

26. Anordnung nach Anspruch 25, **dadurch gekennzeichnet, dass** die erste Anwendung zur Absicherung der zu übermittelnden Autorisierungsinformation durch kryptographische Mittel ausgebildet ist.

27. Anordnung nach Anspruch 25 oder 26, **dadurch gekennzeichnet, dass** zur kryptographischen Absicherung der zu übermittelnden Autorisierungsinformation wenigstens ein durch eine Hash-Funktion generierter Hashwert der zu übermittelnden Autorisierungsinformation und/oder eine Verschlüsselung der zu übermittelnden Autorisierungsinformation und/oder eine digitale Signatur über der zu übermittelnden Autorisierungsinformation vorgesehen ist.

28. Anordnung nach einem der Ansprüche 22 bis 27, **dadurch gekennzeichnet, dass** die Datenverarbeitungseinrichtung (3, 4) zur Übermittlung einer weiteren Autorisierungsnachricht an das Sicherheitsmodul (6) ausgebildet ist, welche
- die zu übermittelnde Autorisierungsinformation und eine Identifikation der ersten Anwendung umfasst und
- insbesondere zusätzlich eine Identifikation der Datenverarbeitungseinrichtung (3, 4) und/oder des Nutzers der ersten Anwendung umfasst.

29. Anordnung nach Anspruch 28, **dadurch gekennzeichnet, dass**
- die erste Anwendung zur Verschlüsselung wenigstens der zu übermittelnden Autorisierungsinformation der weiteren Autorisierungsnachricht ausgebildet ist und
- das Sicherheitsmodul (6) derart ausgebildet ist, dass es
- zumindest die zu übermittelnde Autorisierungsinformation der weiteren Autorisierungsnachricht entschlüsselt,
- anhand der Identifikation aus der weiteren Autorisierungsnachricht eine in einem Speicher des Sicherheitsmoduls (6.5, 6.12, 6.15, 6.18) gespeicherte, der ersten Anwendung und/oder der Datenverarbeitungseinrichtung (3, 4) und/oder dem Nutzer der ersten Anwendung zugeordnete Vergleichs-Autorisierungsinformation ermittelt, und
- zur Verifikation der Autorisierung die gespeicherte Vergleichs-Autorisierungsinformation mit der entschlüsseltenzu übermittelnden Autorisierungsinformation vergleicht und
- das Sicherheitsmodul (6) zur Bereitstellung des ersten Dienstes bei Vorliegen einer vorgegebenen Beziehung zwischen der gespeicherten Vergleichs-Autorisierungsinformation und der entschlüsselten zu übermittelnden Autorisierungsinformation ausgebildet ist.

30. Anordnung nach einem der Ansprüche 22 bis 29, **dadurch gekennzeichnet, dass** die zu übermittelnde Autorisierungsinformation ein Passwort und/oder ein biometrisch erfasstes Merkmal des Nutzers der ersten Anwendung umfasst.

31. Anordnung nach Anspruch 30, **dadurch gekennzeichnet, dass**
- die zu übermittelnde Autorisierungsinformation ein Passwort umfasst und
- und die Datenverarbeitungseinrichtung (3, 4) eine Eingabeeinrichtung (3.1) zur Eingabe des Passworts durch den Nutzer der ersten Anwendung und zur Übergabe des Passworts an die erste Anwendung umfasst, wobei
- die Eingabeeinrichtung (3.1) zur manuellen Eingabe des Passworts durch den Nutzer und/oder zum Auslesen einer das Passwort umfassenden Speichereinrichtung (12) ausgebildet ist.

32. Anordnung nach Anspruch 30 oder 31, **dadurch gekennzeichnet, dass**
- die zu übermittelnde Autorisierungsinformation ein biometrisches Merkmal des Nutzers der ersten Anwendung umfasst und
- die Datenverarbeitungseinrichtung einen biometrischen Sensor (3.1) zur Erfassung des biometrischen Merkmals und zur Übergabe des erfassten biometrischen Merkmals an die erste Anwendung umfasst.

33. Anordnung nach einem der Ansprüche 22 bis 32, **dadurch gekennzeichnet, dass** die zu übermittelnde Autorisierungsinformation wenigstens einem Nutzer der ersten Anwendung zugeordnet ist.

34. Anordnung nach einem der Ansprüche 20 bis 33, **dadurch gekennzeichnet, dass**
- das Sicherheitsmodul (6) einen Abrechnungsspeicher (6.2) aufweist und
- das Sicherheitsmodul (6) derart ausgebildet ist, dass es den Inhalt eines Abrechnungsspeichers (6.2) des Sicherheitsmoduls (6) während und/oder nach der Bereitstellung des ersten Dienstes zur Abrechnung für die Bereitstellung des ersten Dienstes modifiziert.

35. Anordnung nach Anspruch 34, **dadurch gekennzeichnet, dass** der Abrechnungsspeicher (6.2) ein postalischer Abrechnungsspeicher des Sicherheitsmoduls (6) ist.

36. Anordnung nach einem der Ansprüche 20 bis 35, **dadurch gekennzeichnet, dass** der erste Dienst
- die Verschlüsselung und/oder die Entschlüsselung und/oder die digitale Signierung und/oder die digitale Zertifizierung und/oder die digitale Verifizierung von Daten umfasst, die hierzu von der ersten Anwendung an das Sicherheitsmodul (6) übermittelt werden,
und/oder
- die Speicherung von Daten in einem Speicher (6.23) des Sicherheitsmoduls (6) umfasst, die hierzu von der ersten Anwendung an das Sicherheitsmodul (6) übermittelt werden.

37. Anordnung nach Anspruch 36, **dadurch gekennzeichnet, dass** der erste Dienst
- die Verschlüsselung und/oder digitale Signierung und/oder digitale Zertifizierung von Daten umfasst, die hierzu von der ersten Anwendung an das Sicherheitsmodul (6) übermittelt werden, und
- unter Verwendung einer kryptographischen Bindung des Sicherheitsmoduls (6) an eine postalische Public-Key-Infrastruktur erfolgt.

38. Anordnung nach einem der Ansprüche 20 bis 37, **dadurch gekennzeichnet, dass**
- das Sicherheitsmodul in einem Speicher (6.5, 6.12, 6.15) für wenigstens eine Datenverarbeitungseinrichtung (3, 4) und/oder wenigstens einen Nutzer der Datenverarbeitungseinrichtung (3, 4) eine Mehrzahl von Speichereinträgen umfasst, die jeweils einer ersten Anwendung zugeordnet sind,
- jeder der Speichereinträge wenigstens eine Identifikation und/oder eine Autorisierungsinformation umfasst, und
- das Sicherheitsmodul (6) zur Generierung der Autorisierungsnachricht denjenigen Speichereintrag verwendet, welcher der aktuell anfordernden ersten Anwendung zugeordnet ist.

## Claims

1. Method for providing at least one security-relevant service by means of a security module (6) of a franking machine (2) for at least one first data processing application executed on a data processing device (3, 4) which can be connected to the franking machine (2), in which,
- in a request step (7.5), the first application requests a security-relevant first service from the security module (6) and,
- in a service providing step (7.10) following the request step (7.5), the security module (6) provides the first service,
**characterised in that**;
- in a verification step (7.6) preceding the service providing step (7.10), the security module (6) verifies the first application's authorisation to request the first service, wherein
- the first service comprises outputting an authorisation message which comprises an identification stored in the security module (6) and/or an authorisation information stored in the security module (6), wherein the authorisation message is provided for input as access data in and for the first application and/or a second data processing application and
- the authorisation message is generated dependent on the first application and/or the data processing device (3, 4) and/or the user of the first application.

2. Method according to Claim 1, **characterised in that** the first application is a non-postal data processing application and/or the first service is a non-postal service.

3. Method according to Claim 1 or 2, **characterised in that**, in the verification step (7.6) for verifying the authorisation to request the first service, the security module (6)
- verifies an authorisation information of the first application to be transmitted and,
- in particular, additionally verifies an authorisation information of the data processing device and/or of the user of the first application to be additionally transmitted.

4. Method according to Claim 3, **characterised in that**, in an authorisation step (7.2) preceding the verification step (7.6),
- the security module requests from the first application the authorisation information of the first application to be transmitted and,
- in particular, requests from the first application the authorisation information of the data processing device (3, 4) and/or of the user of the first application to be additionally transmitted
and/or
- the first application transmits to the security module (6) the authorisation information of the first application to be transmitted and,
- in particular, the first application transmits to the security module (6) the authorisation information of the data processing device (3, 4) and/or of the user of the first application to be additionally transmitted.

5. Method according to Claim 3 or 4, **characterised in that**, in the authorisation step (7.2),
- the first application invites the user of the first application to input authorisation information to be input by the user
and
- the authorisation information to be input by the user is forwarded as authorisation information to be transmitted by the first application to the security module (6)
and/or
- by using the authorisation information to be input by the user, the first application generates further authorisation information to be transmitted and forwards it to the security module (6).

6. Method according to any one of Claims 3 to 5, **characterised in that** the authorisation information to be transmitted is transmitted to the security module (6) in a manner secured by cryptographic means.

7. Method according to Claim 6, **characterised in that** the first application secures the authorisation information to be transmitted by cryptographic means before it is transmitted to the security module (6).

8. Method according to Claim 6 or 7, **characterised in that** at least one hash value of the authorisation information to be transmitted generated by a hash function and/or an encryption of the authorisation information to be transmitted and/or a digital signature over the authorisation information to be transmitted is used to cryptographically secure the authorisation information to be transmitted.

9. Method according to any one of Claims 3 to 8, **characterised in that** in the authorisation step a further authorisation message is transmitted to the security module (6), which
- comprises the authorisation information to be transmitted and an identification of the first application and,
- in particular, additionally comprises an identification of the data processing device (3, 4) and/or of the user of the first application.

10. Method according to Claim 9, **characterised in that**
- the first application, in the authorisation step (7.2), encrypts at least the authorisation information of the further authorisation message to be transmitted and
- the security module (6), in the verification step (7.6),
- decrypts at least the authorisation information of the further authorisation message to be transmitted,
- by means of the identification from the further authorisation message identifies stored comparison authorisation information assigned to the first application and/or to the data processing device (3, 4) and/or to the user of the first application,
- to verify the authorisation compares the stored comparison authorisation information with the decrypted authorisation information to be transmitted and
- the security module (6) provides the first service in the service providing step (7.10) when a predetermined relationship exists between the stored comparison authorisation information and the decrypted authorisation information to be transmitted.

11. Method according to any one of Claims 3 to 10, **characterised in that** the authorisation information to be transmitted comprises a password and/or a biometrically detected feature of the user of the first application.

12. Method according to Claim 11, **characterised in that**
- the authorisation information to be transmitted comprises a password and
- the password is passed to the first application by the user of the first application manually inputting it or by reading it from a memory device (12).

13. Method according to Claim 11 or 12, **characterised in that**
- the authorisation information to be transmitted comprises a biometric feature of the user of the first application and
- the biometric feature is passed to the first application by a biometric sensor (3.1) which has detected the corresponding biometric feature of the user of the first application.

14. Method according to any one of Claims 3 to 13, **characterised in that** the authorisation information to be transmitted is assigned to at least one user of the first application.

15. Method according to any one of the preceding claims, **characterised in that** the security module (6) effects a deduction for providing the first service in step which is performed during and/or after the service providing step (7.10).

16. Method according to Claim 15, **characterised in that**,
- in the billing step, the content of an accounting memory (6.2) of the security module (6) is modified, wherein
- the billing memory (6.2) is a postal accounting memory of the security module (6).

17. Method according to any one of the preceding claims, **characterised in that** the first service
- comprises encrypting and/or decrypting and/or digitally signing and/or digitally certifying and/or digitally verifying data which is transmitted by the first application to the security module (6) for this purpose
and/or
- comprises storing data in the security module (6) which are transmitted by the first application to the security module (6) for this purpose.

18. Method according to Claim 17, **characterised in that** the first service
- comprises encrypting and/or digitally signing and/or digitally certifying data which is transmitted by the first application to the security module (6) for this purpose and
- is performed by using a cryptographic link of the security module (6) to a postal public-key infrastructure.

19. Method according to any one of the preceding claims, **characterised in that**
- the first service is provided for a plurality of first applications,
- the security module (6) comprises a plurality of memory entries in a memory (6.5, 6.12, 6.15) for at least one data processing device (3, 4) and/or at least one user of the data processing device (3, 4), the memory entries in each case being assigned to one of the first applications,
- each of the memory entries comprises at least one identification and/or an authorisation information and
- in order to generate the authorisation message the memory entry which is assigned to the first application currently making the request is used.

20. Arrangement for data processing having
- a franking machine (2) which comprises a postal security module (6) and
- at least one data processing device (3, 4) which can be connected to the franking machine (2) and is designed to execute at least one first data processing application, wherein
- the first application is designed to request a security-relevant first service from the security module (6) and
- the security module (6) is designed to provide the first service following the request,
**characterised in that**
- the security module (6) is designed to verify the first application's authorisation to request the first service, this verification preceding the providing of the service, wherein
- the first service comprises outputting an authorisation message which comprises an identification stored in the security module (6) and/or an authorisation information stored in the security module (6), wherein the authorisation message is provided for input as access data in and for the first application and/or a second data processing application and
- the security module is designed to generate the authorisation message dependent on the first application and/or the data processing device and/or the user of the first application.

21. Arrangement according to Claim 20, **characterised in that** the first application is a non-postal data processing application and the first service is a non-postal service.

22. Arrangement according to Claim 20 or 21, **characterised in that** the security module (6) for verifying the authorisation to request the first service
- is designed to verify an authorisation information of the first application to be transmitted and
- is designed, in particular, to verify an authorisation information of the data processing device (3, 4) and/or of the user of the first application to be additionally transmitted.

23. Arrangement according to Claim 22, **characterised in that**
- the security module (6) is designed to request from the first application the authorisation information of the first application to be transmitted and
- the security module (6) is designed, in particular, to request from the first application the authorisation information of the data processing device (3, 4) and/or of the user of the first application to be additionally transmitted
and/or
- the first application is designed to transmit to the security module (6) the authorisation information of the first application to be transmitted and
- the first application is designed, in particular, to transmit to the security module (6) the authorisation information of the data processing device (3, 4) and/or of the user of the first application to be additionally transmitted.

24. Arrangement according to Claim 22 or 23, **characterised in that** the first application is designed in such a way that
- the user of the first application is requested to input authorisation information to be input by the user
and
- the authorisation information to be input by the user is forwarded as authorisation information to be transmitted by the first application to the security module (6)
and/or
- by using the authorisation information to be input by the user, further authorisation information to be transmitted is generated and forwarded to the security module (6).

25. Arrangement according to any one of Claims 22 to 24, **characterised in that** the authorisation information to be transmitted to the security module (6) is secured by cryptographic means.

26. Arrangement according to Claim 25, **characterised in that** the first application is designed to secure the authorisation information to be transmitted by cryptographic means.

27. Arrangement according to Claim 25 or 26, **characterised in that** at least one hash value of the authorisation information to be transmitted generated by a hash function and/or an encryption of the authorisation information to be transmitted and/or a digital signature over the authorisation information to be transmitted is provided to cryptographically secure the authorisation information to be transmitted.

28. Arrangement according to any one of Claims 22 to 27, **characterised in that** the data processing device (3, 4) is designed to transmit a further authorisation message to the security module (6) which
- comprises the authorisation message to be transmitted and an identification of the first application and,
- in particular, additionally comprises an identification of the data processing device (3, 4) and/or of the user of the first application.

29. Arrangement according to Claim 28, **characterised in that**
- the first application is designed to encrypt at least the authorisation information of the further authorisation message to be transmitted and
- the security module (6) is designed in such a way that it
- decrypts at least the authorisation information of the further authorisation message to be transmitted,
- by means of the identification from the further authorisation message identifies comparison authorisation information, stored in a memory of the security module (6.5, 6.12, 6.15, 6.18) and assigned to the first application and/or to the data processing device (3, 4) and/or to the user of the first application, and
- to verify the authorisation compares the stored comparison authorisation information with the decrypted authorisation information to be transmitted and
- the security module (6) is designed to provide the first service when a predetermined relationship exists between the stored comparison authorisation information and the decrypted authorisation information to be transmitted.

30. Arrangement according to any one of Claims 22 to 29, **characterised in that** the authorisation information to be transmitted comprises a password and/or a biometrically detected feature of the user of the first application.

31. Arrangement according to Claim 30, **characterised in that**
- the authorisation information to be transmitted comprises a password and
- the data processing device (3, 4) comprises an input device (3.1) for the user of the first application to input the password and for passing the password to the first application, wherein
- the input device (3.1) is designed for the user to manually input the password and/or for reading from a memory device (12) comprising the password.

32. Arrangement according to Claim 30 to 31, **characterised in that**
- the authorisation information to be transmitted comprises a biometric feature of the user of the first application and
- the data processing device comprises a biometric sensor (3.1) for detecting the biometric feature and for passing the detected biometric feature to the first application.

33. Arrangement according to any one of Claims 22 to 32, **characterised in that** the authorisation information to be transmitted is assigned to at least one user of the first application.

34. Arrangement according to any one of Claims 20 to 33, **characterised in that**
- the security module (6) has a billing memory (6.2) and
- the security module (6) is designed in such a way that it modifies the content of a billing memory (6.2) of the security module (6), during and/or after providing the first service, to effect a deduction for providing the first service.

35. Arrangement according to Claim 34, **characterised in that** the billing memory (6.2) is a postal accounting memory of the security module (6).

36. Arrangement according to any one of Claims 20 to 35, **characterised in that** the first service
- comprises encrypting and/or decrypting and/or digitally signing and/or digitally certifying and/or digitally verifying data which is transmitted by the first application to the security module (6) for this purpose
and/or
- comprises storing data in a memory (6.23) of the security module (6) which are transmitted by the first application to the security module (6) for this purpose.

37. Arrangement according to Claim 36, **characterised in that** the first service
- comprises encrypting and/or digitally signing and/or digitally certifying data which is transmitted by the first application to the security module (6) for this purpose and
- is performed by using a cryptographic link of the security module (6) to a postal public-key infrastructure.

38. Arrangement according to any one of Claims 20 to 37, **characterised in that**
- the security module comprises a plurality of memory entries in a memory (6.5, 6.12, 6.15) for at least one data processing device (3, 4) and/or at least one user of the data processing device (3, 4), the memory entries in each case being assigned to a first application,
- each of the memory entries comprises at least one identification and/or an authorisation information and
- in order to generate the authorisation message the security module (6) uses the memory entry which is assigned to the first application currently making the request.

## Revendications

1. Procédé pour fournir au moins un service pertinent à la sécurité au moyen d'un module de sécurité (6) d'une machine à affranchir (2) pour au moins une première application de traitement de données exécutée sur un dispositif de traitement de données (3, 4) qui peut être connecté à la machine à affranchir (2), dans lequel,
- dans une étape de demande (7.5), la première application demande un premier service pertinent à la sécurité au module de sécurité (6) et,
- dans une étape de fourniture de service (7.10) suivant l'étape de demande (7.5), le module de sécurité (6) fournit le premier service,
**caractérisé en ce que**,
- dans une étape de vérification (7.6) précédant l'étape de fourniture de service (7.10), le module de sécurité (6) vérifie l'autorisation de la première application pour demander le premier service, où
- le premier service comprend la transmission d'un message d'autorisation qui comprend une identification stockée dans le module de sécurité (6) et/ou une information d'autorisation stockée dans le module de sécurité (6), où le message d'autorisation est fourni pour être entré comme données d'accès dans et pour la première application et/ou une seconde application de traitement de données et
- le message d'autorisation est généré en fonction de la première application et/ou du dispositif de traitement de données (3, 4) et/ou de l'utilisateur de la première application.

2. Procédé selon la Revendication 1, **caractérisé en ce que** la première application est une application de traitement de données non postale et/ou le premier service est un service non postal.

3. Procédé selon la Revendication 1 ou 2, **caractérisé en ce que**, dans l'étape de vérification (7.6) pour vérifier l'autorisation à demander le premier service, le module de sécurité (6)
- vérifie une information d'autorisation de la première application à transmettre et,
- en particulier, vérifie en outre une information d'autorisation du dispositif de traitement de données et/ou de l'utilisateur de la première application à transmettre en plus.

4. Procédé selon la Revendication 3, **caractérisé en ce que**, dans une étape d'autorisation (7.2) précédant l'étape de vérification (7.6),
- le module de sécurité demande à la première application l'information d'autorisation de la première application à transmettre et,
- en particulier, demande à la première application l'information d'autorisation du dispositif de traitement de données (3, 4) et/ou de l'utilisateur de la première application à transmettre en plus
et/ou
- la première application transmet au module de sécurité (6) l'information d'autorisation de la première application à transmettre et,
- en particulier, la première application transmet au module de sécurité (6) l'information d'autorisation du dispositif de traitement de données (3, 4) et/ou de l'utilisateur de la première application à transmettre en plus.

5. Procédé selon la Revendication 3 ou 4, **caractérisé en ce que**, dans l'étape d'autorisation (7.2),
- la première application invite l'utilisateur de la première application à entrer une information d'autorisation à être entrée par l'utilisateur
et
- l'information d'autorisation à être entrée par l'utilisateur est fournie comme information d'autorisation à transmettre par la première application au module de sécurité (6)
et/ou
- en utilisant l'information d'autorisation à être entrée par l'utilisateur, la première application génère une ultérieure information d'autorisation à transmettre et la fournit vers le module de sécurité (6).

6. Procédé selon une quelconque des Revendications 3 à 5, **caractérisé en ce que** l'information d'autorisation à transmettre est transmise de manière sécurisée par des moyens cryptographiques au module de sécurité (6).

7. Procédé selon la Revendication 6, **caractérisé en ce que** la première application sécurise l'information d'autorisation à transmettre par des moyens cryptographiques avant qu'elle ne soit transmise au module de sécurité (6).

8. Procédé selon la Revendication 6 ou 7, **caractérisé en ce qu'**au moins une valeur de hachage de l'information d'autorisation à transmettre, générée par une fonction de hachage et/ou un chiffrement de l'information d'autorisation à transmettre et/ou une signature numérique sur l'information d'autorisation à transmettre, est utilisée pour sécuriser cryptographiquement l'information d'autorisation à transmettre.

9. Procédé selon une quelconque des Revendications 3 à 8, **caractérisé en ce que**, dans l'étape d'autorisation, un ultérieur message d'autorisation est transmis au module de sécurité (6), lequel
- comprend l'information d'autorisation à transmettre et une identification de la première application et,
- en particulier, comprend en outre une identification du dispositif de traitement de données (3, 4) et/ou de l'utilisateur de la première application.

10. Procédé selon la Revendication 9, **caractérisé en ce que**
- la première application, dans l'étape d'autorisation (7.2), chiffre au moins l'information d'autorisation de l'ultérieur message d'autorisation à transmettre et
- le module de sécurité (6), dans l'étape de vérification (7.6),
- déchiffre au moins l'information d'autorisation de l'ultérieur message d'autorisation à transmettre,
- au moyen de l'identification à partir de l'ultérieur message d'autorisation identifie une information d'autorisation de comparaison stockée attribuée à la première application et/ou au dispositif de traitement de données (3, 4) et/ou à l'utilisateur de la première application,
- pour vérifier l'autorisation, compare l'information d'autorisation de comparaison stockée avec l'information d'autorisation à transmettre déchiffrée et
- le module de sécurité (6) fournit le premier service dans l'étape de fourniture de service (7.10) lorsqu'un rapport prédéterminé existe entre l'information d'autorisation de comparaison stockée et l'information d'autorisation à transmettre déchiffrée.

11. Procédé selon une quelconque des Revendications 3 à 10, **caractérisé en ce que** l'information d'autorisation à transmettre comprend un mot de passe et/ou une caractéristique détectée biométriquement de l'utilisateur de la première application.

12. Procédé selon la Revendication 11, **caractérisé en ce que**
- l'information d'autorisation à transmettre comprend un mot de passe et
- le mot de passe est transmis à la première application par l'utilisateur de la première application en l'entrant manuellement ou en le lisant à partir d'un dispositif de mémoire (12).

13. Procédé selon la Revendication 11 ou 12, **caractérisé en ce que**
- l'information d'autorisation à transmettre comprend une caractéristique biométrique de l'utilisateur de la première application et
- la caractéristique biométrique est transmise à la première application par un capteur biométrique (3.1) qui a détecté la caractéristique biométrique correspondante de l'utilisateur de la première application.

14. Procédé selon une quelconque des Revendications 3 à 13, **caractérisé en ce que** l'information d'autorisation à transmettre est attribuée à au moins un utilisateur de la première application.

15. Procédé selon une quelconque des revendications précédentes, **caractérisé en ce que** le module de sécurité (6) effectue une déduction pour fournir le premier service dans une étape de déduction qui est effectuée pendant et/ou après l'étape de fourniture de service (7.10).

16. Procédé selon la Revendication 15, **caractérisé en ce que**,
- dans l'étape de déduction, le contenu d'une mémoire de facturation (6.2) du module de sécurité (6) est modifié, où
- la mémoire de facturation (6.2) est une mémoire de facturation postale du module de sécurité (6).

17. Procédé selon une quelconque des revendications précédentes, **caractérisé en ce que** le premier service
- comprend chiffrer et/ou déchiffrer et/ou signer numériquement et/ou certifier numériquement et/ou vérifier numériquement des données qui sont transmises par la première application au module de sécurité (6) à cet effet et/ou
- comprend stocker des données dans le module de sécurité (6) qui sont transmises par la première application au module de sécurité (6) à cet effet.

18. Procédé selon la Revendication 17, **caractérisé en ce que** le premier service
- comprend chiffrer et/ou signer numériquement et/ou certifier numériquement des données qui sont transmises par la première application au module de sécurité (6) à cet effet et
- est effectué en utilisant un lien cryptographique du module de sécurité (6) vers une infrastructure à clé publique postale.

19. Procédé selon une quelconque des revendications précédentes, **caractérisé en ce que**
- le premier service est fourni pour une pluralité de premières applications,
- le module de sécurité (6) comprend une pluralité d'entrées de mémoire dans une mémoire (6.5, 6.12, 6.15) pour au moins un dispositif de traitement de données (3, 4) et/ou au moins un utilisateur du dispositif de traitement de données (3, 4), les entrées de mémoire étant dans chaque cas attribuées à l'une des premières applications,
- chacune des entrées de mémoire comprend au moins une identification et/ou une information d'autorisation et
- afin de générer le message d'autorisation, l'entrée de mémoire qui est attribuée à la première application faisant actuellement la demande est utilisée.

20. Arrangement pour le traitement de données ayant
- une machine à affranchir (2) qui comprend un module de sécurité postal (6) et
- au moins un dispositif de traitement de données (3, 4) qui peut être connecté à la machine à affranchir (2) et est conçu pour exécuter au moins une première application de traitement de données, où
- la première application est conçue pour demander un premier service pertinent à la sécurité au module de sécurité (6) et
- le module de sécurité (6) est conçu pour fournir le premier service suite à la demande,
**caractérisé en ce que**
- le module de sécurité (6) est conçu pour vérifier l'autorisation de la première application à demander le premier service, cette vérification précédant la fourniture du service, où
- le premier service comprend la transmission d'un message d'autorisation qui comprend une identification stockée dans le module de sécurité (6) et/ou une information d'autorisation stockée dans le module de sécurité (6), où le message d'autorisation est fourni pour être entré comme données d'accès dans et pour la première application et/ou une seconde application de traitement de données et
- le module de sécurité est conçu pour générer le message d'autorisation en fonction de la première application et/ou du dispositif de traitement de données et/ou de l'utilisateur de la première application.

21. Arrangement selon la Revendication 20, **caractérisé en ce que** la première application est une application de traitement de données non postale et le premier service est un service non postal.

22. Arrangement selon la Revendication 20 ou 21, **caractérisé en ce que** le module de sécurité (6) pour vérifier l'autorisation à demander le premier service
- est conçu pour vérifier une information d'autorisation de la première application à transmettre et
- est conçu, en particulier, pour vérifier une information d'autorisation du dispositif de traitement de données (3, 4) et/ou de l'utilisateur de la première application à transmettre en plus.

23. Arrangement selon la revendication 22, **caractérisé en ce que**
- le module de sécurité (6) est conçu pour demander à la première application l'information d'autorisation de la première application à transmettre et
- le module de sécurité (6) est conçu en particulier pour demander à la première application l'information d'autorisation du dispositif de traitement de données (3, 4) et/ou de l'utilisateur de la première application à transmettre en plus
et/ou
- la première application est conçue pour transmettre au module de sécurité (6) l'information d'autorisation de la première application à transmettre et
- la première application est conçue, en particulier, pour transmettre au module de sécurité (6) l'information d'autorisation du dispositif de traitement de données (3, 4) et/ou de l'utilisateur de la première application à transmettre en plus.

24. Arrangement selon la Revendication 22 ou 23, **caractérisé en ce que** la première application est conçue de telle manière que
- il soit demandé à l'utilisateur de la première application d'entrer une information d'autorisation à être entrée par l'utilisateur
et
- l'information d'autorisation entrée par l'utilisateur soit fournie comme information d'autorisation à transmettre par la première application au module de sécurité (6)
et/ou
- en utilisant l'information d'autorisation à être entrée par l'utilisateur, une ultérieure information d'autorisation à transmettre soit générée et fournie vers le module de sécurité (6).

25. Arrangement selon une quelconque des Revendications 22 à 24, **caractérisé en ce que** l'information d'autorisation à transmettre au module de sécurité (6) est sécurisée par des moyens cryptographiques.

26. Arrangement selon la Revendication 25, **caractérisé en ce que** la première application est conçue pour sécuriser l'information d'autorisation à transmettre par des moyens cryptographiques.

27. Arrangement selon la Revendication 25 ou 26, **caractérisé en ce qu'**au moins une valeur de hachage de l'information d'autorisation à transmettre, générée par une fonction de hachage et/ou un chiffrement de l'information d'autorisation à transmettre et/ou une signature numérique sur l'information d'autorisation à transmettre, est utilisée pour sécuriser cryptographiquement l'information d'autorisation à transmettre.

28. Arrangement selon une quelconque des Revendications 22 à 27, **caractérisé en ce que** le dispositif de traitement de données (3, 4) est conçu pour transmettre un ultérieur message d'autorisation au module de sécurité (6) lequel
- comprend l'information d'autorisation à transmettre et une identification de la première application et,
- en particulier, comprend en outre une identification du dispositif de traitement de données (3, 4) et/ou de l'utilisateur de la première application.

29. Arrangement selon la Revendication 28, **caractérisé en ce que**
- la première application est conçue pour chiffrer au moins l'information d'autorisation de l'ultérieur message d'autorisation à transmettre et
- le module de sécurité (6) est conçu de telle manière qu'il
- déchiffre au moins l'information d'autorisation de l'ultérieur message d'autorisation à transmettre,
- au moyen de l'identification à partir de l'ultérieur message d'autorisation identifie une information d'autorisation de comparaison stockée dans une mémoire du module de sécurité (6.5, 6.12, 6.15, 6.18) et attribuée à la première application et/ou au dispositif de traitement de données (3, 4) et/ou à l'utilisateur de la première application, et
- pour vérifier l'autorisation, compare l'information d'autorisation de comparaison stockée avec l'information d'autorisation à transmettre déchiffrée et
- le module de sécurité (6) est conçu pour fournir le premier service lorsqu'un rapport prédéterminé existe entre l'information d'autorisation de comparaison stockée et l'information d'autorisation à transmettre déchiffrée.

30. Arrangement selon une quelconque des Revendications 22 à 29, **caractérisé en ce que** l'information d'autorisation à transmettre comprend un mot de passe et/ou une caractéristique détectée biométriquement de l'utilisateur de la première application.

31. Arrangement selon la Revendication 30, **caractérisé en ce que**
- l'information d'autorisation à transmettre comprend un mot de passe et
- le dispositif de traitement de données (3, 4) comprend un dispositif d'entrée (3.1) pour que l'utilisateur de la première application entre le mot de passe et pour transmettre le mot de passe à la première application, où
- le dispositif d'entrée (3.1) est conçu pour que l'utilisateur entre manuellement le mot de passe et/ou pour lire à partir d'un dispositif de mémoire (12) comprenant le mot de passe.

32. Arrangement selon les Revendications 30 à 31, **caractérisé en ce que**
- l'information d'autorisation à transmettre comprend une caractéristique biométrique de l'utilisateur de la première application et
- le dispositif de traitement de données comprend un capteur biométrique (3.1) pour détecter la caractéristique biométrique et pour transmettre la caractéristique biométrique détectée à la première application.

33. Arrangement selon une quelconque des Revendications 22 à 32, **caractérisé en ce que** l'information d'autorisation à transmettre est attribuée à au moins un utilisateur de la première application.

34. Arrangement selon une quelconque des Revendications 20 à 33, **caractérisé en ce que**
- le module de sécurité (6) a une mémoire de facturation (6.2) et
- le module de sécurité (6) est conçu de telle manière qu'il modifie le contenu d'une mémoire de facturation (6.2) du module de sécurité (6), pendant et/ou après avoir fourni le premier service, à des fins d'effectuer une déduction pour avoir fourni le premier service.

35. Arrangement selon la Revendication 34, **caractérisé en ce que** la mémoire de facturation (6.2) est une mémoire de facturation postale du module de sécurité (6).

36. Arrangement selon une quelconque des Revendications 20 à 35, **caractérisé en ce que** le premier service
- comprend chiffrer et/ou déchiffrer et/ou signer numériquement et/ou certifier numériquement et/ou vérifier numériquement des données qui sont transmises par la première application au module de sécurité (6) à cet effet et/ou
- comprend stocker des données dans une mémoire (6.23) du module de sécurité (6) qui sont transmises par la première application au module de sécurité (6) à cet effet.

37. Arrangement selon la Revendication 36, **caractérisé en ce que** le premier service
- comprend chiffrer et/ou signer numériquement et/ou certifier numériquement des données qui sont transmises par la première application au module de sécurité (6) à cet effet et
- est effectué en utilisant un lien cryptographique du module de sécurité (6) vers une infrastructure à clé publique postale.

38. Arrangement selon une quelconque des Revendications 20 à 37, **caractérisé en ce que**
- le module de sécurité comprend une pluralité d'entrées de mémoire dans une mémoire (6.5, 6.12, 6.15) pour au moins un dispositif de traitement de données (3, 4) et/ou au moins un utilisateur du dispositif de traitement de données (3, 4), les entrées de mémoire étant dans chaque cas attribuées à une première application,
- chacune des entrées de mémoire comprend au moins une identification et/ou une information d'autorisation et
- afin de générer le message d'autorisation, le module de sécurité (6) utilise l'entrée de mémoire qui est attribuée à la première application faisant actuellement la demande.
